# EUROPEAN PATENT APPLICATION

(11) **EP 4 657 939 A1**
(43) Date of publication of application: **03.12.2025**
(21) Application number: 23931389.3
(22) Date of filing: 06.04.2023
(51) Int. Cl.: H04W 72/04

(54) **SRS TRANSMISSION METHOD AND APPARATUS AND EQUIPMENT**

(71) Applicant: New H3C Technologies Co., Ltd., Hangzhou, Zhejiang 310052 (CN)
(72) Inventor: ZHOU, Lei, Beijing 100102 (CN); KONG, Lei, Beijing 100102 (CN)
(74) Representative: 2SPL Patentanwälte PartG mbB
(86) International application number: PCT/CN2023/086616
(87) International publication number: WO 2024/207319

(57) **Abstract**

The present disclosure provides SRS transmission methods, apparatuses and devices. The method includes: receiving SRS resource configuration information sent by a base station, where the SRS resource configuration information is used to indicate an SRS resource set, and the SRS resource set includes an SRS resource overlapping with an uplink subband of a SBFD time-frequency resource; and sending an SRS to the base station based on an SRS resource in the SRS resource set. Through the solution of the present disclosure, resource utilization rate can be improved, and the transmission reliability of uplink data can be improved.

## Description

### TECHNICAL FIELD

The present disclosure relates to the field of communication technologies, and in particular to, SRS transmission methods, apparatuses and devices.

### BACKGROUND

A time division duplex (TDD) system is widely used in mobile communication systems, such as 5G systems. In the TDD system, a frame structure may be divided into downlink (DL) slots, uplink (UL) slots, and flexible slots. A DL slot includes multiple DL symbols, and downlink data is processed in frequency domain resources corresponding to these DL symbols. A UL slot includes multiple UL symbols, and uplink data is processed in frequency domain resources corresponding to these UL symbols. A flexible slot includes at least one flexible (F) symbol, the Flexible symbol may be used for DL, i.e., downlink data is processed in frequency domain resource corresponding to the Flexible symbol, the Flexible symbol may also be used for UL, i.e., uplink data is processed in the frequency domain resource corresponding to the Flexible symbol, and the Flexible symbol may also be used for guard period (GP), i.e., uplink and downlink switching protection is performed in the frequency domain resource corresponding to the Flexible symbol. The TDD system can operate in a half-duplex (HD) mode, i.e., the same frequency domain resource can be used only for UL or DL at the same moment.

### SUMMARY

The present disclosure provides an SRS transmission method, performed by a user equipment, including:
receiving SRS resource configuration information sent by a base station, where the SRS resource configuration information is used to indicate an SRS resource set, and the SRS resource set includes an SRS resource overlapping with an uplink subband of an SBFD time-frequency resource; and
sending an SRS to the base station based on an SRS resource in the SRS resource set.

The present disclosure provides an SRS transmission method, performed by a base station, including:
sending SRS resource configuration information to a user equipment, where the SRS resource configuration information is used to indicate an SRS resource set used by the user equipment, and the SRS resource set includes an SRS resource overlapping with an uplink subband of a subband full-duplex SBFD time-frequency resource; and
receiving an SRS sent by the user equipment based on an SRS resource in the SRS resource set.

The present disclosure provides an SRS transmission apparatus, performed by a user equipment, including:
a receiving module, configured to receive SRS resource configuration information sent by a base station, where the SRS resource configuration information is used to indicate an SRS resource set, and the SRS resource set includes an SRS resource overlapping with an uplink subband of an SBFD time-frequency resource; and
a sending module, configured to send an SRS to the base station based on an SRS resource in the SRS resource set.

The present disclosure provides an SRS transmission apparatus, performed by a base station, including:
a sending module, configured to send SRS resource configuration information to a user equipment, where the SRS resource configuration information is used to indicate an SRS resource set used by the user equipment, and the SRS resource set includes an SRS resource overlapping with an uplink subband of a subband full-duplex SBFD time-frequency resource; and
a receiving module, configured to receive an SRS sent by the user equipment based on an SRS resource in the SRS resource set.

The present disclosure provides a user equipment, including a processor and a machine-readable storage medium, where the machine-readable storage medium stores machine-executable instructions executable by the processor, and the processor is configured to execute the machine-executable instructions to implement the SRS transmission method of the above examples.

The present disclosure provides a base station, including a processor and a machine-readable storage medium, where the machine-readable storage medium stores machine-executable instructions executable by the processor, and the processor is configured to execute the machine-executable instructions to implement the SRS transmission method of the above examples.

It can be seen from the above technical solution that UE uses the SRS resource(s) in the SRS resource set(s) for SRS transmission, and when the SBFD time-frequency resource overlaps with the SRS resource, the SBFD time-frequency resource is used for SRS transmission, which further improves uplink data transmission reliability and cell coverage radius, at the same time, enhances the accuracy of downlink beamforming and the real-time performance of beam tracking, and reduces uplink and downlink interference caused by an introduction of SBFD time-frequency resource, so that SBFD time-frequency resource assignment and SRS transmission mechanism can be effectively combined and implemented. From the perspective of a whole system, it can support CSI-RS transmission of a TDD system, improve resource utilization, improve network coverage and network capacity, increase downlink transmission resources, reduce downlink transmission delay and increase downlink transmission capacity.

### BRIEF DESCRIPTION OF DRAWINGS

FIGS. 1A and 1B are schematic flowcharts of SRS transmission methods in an example;
FIG. 2 is a schematic diagram of configuring an SRS resource set for SBFD slots or SBFD symbols;
FIG. 3 is a schematic diagram of configuring an SRS resource set for UL slots or UL symbols;
FIG. 4 is a schematic diagram of discontinuous SRS resources;
FIG. 5 is a schematic diagram of configuring an SRS resource set for SBFD slots /SBFD symbols and non-SBFD slots/non-SBFD symbols;
FIG. 6A is a schematic diagram of multiple third type of SRS resources that are continuous SRS resources;
FIG. 6B is a schematic diagram of multiple third type of SRS resources that are discontinuous SRS resources;
FIGS. 7A and 7B are schematic structural diagrams of SRS transmission apparatuses in an example;
FIG. 8A is a schematic structural diagram of user equipment in an example; and
FIG. 8B is a schematic structural diagram of a base station in an example.

### DETAILED DESCRIPTION

Terms used in embodiments of the present disclosure are only for a purpose of describing specific embodiments, and are not limiting the present disclosure. Singular forms of "a", "said", and "the" used in the present disclosure and in the claims are also intended to include majority forms, unless the context clearly indicates otherwise. It should also be understood that the term "and/or" as used herein refers to any or all of the possible combinations containing one or more of the listed items in association.

It should be understood that although terms first, second, third, etc. may be used to describe various information in the embodiments of the present disclosure, these information should not be limited to these terms. These terms are used only to distinguish the same type of information from one another. For example, without departing from the scope of the present disclosure, first information can also be called second information, and similarly, the second information can also be called the first information. Depending on the context, in addition, the word "if" used can be interpreted as "at" or "when" or "in response to determining".

A TDD system can operate in an HD mode, i.e., same frequency domain resources can be used only for UL or DL at the same moment. In order to use frequency domain resources more flexibly and improve resource utilization, the TDD system can also work in a full-duplex (FD) mode, e.g., the same frequency domain resources are used for both UL and DL at the same moment, that is, uplink data and downlink data are processed on the same frequency domain resources at the same time.

In the TDD system, a frame structure may be divided into DL slots, UL slots and flexible slots, once a frame structure is determined, a UE may send and receive data according to the frame structure. For a UE using the half-duplex (HD) mode, a base station (e.g., gNB, etc.) schedules the UE to send or receive according to the frame structure. For a UE using the FD mode, the base station schedules the UE to send, receive or both send and receive according to the frame structure. To sum up, the base station can configure the frame structure and notify the UE of the frame structure, so that the UE is informed of the frame structure and can correctly send and receive data. From another point of view, after the UE is informed of the frame structure, the UE can know possible inter-UE interference, thus adopting the interference cancellation technology to mitigate the interference and improve communication reliability.

In an example, in the TDD system, for a frame structure mainly for the downlink transmission, usually more DL slots are configured, which results in fewer UL slots, so that an uplink transmission rate is limited and transmission delay of uplink data is increased, resulting in larger uplink transmission delay and unfavourable to uplink services.

In an example of the present disclosure, an SRS transmission method is proposed, in which flexible downlink frequency domain resources and uplink frequency domain resources are configured for UE through SBFD time-frequency resources. Uplink data can be transmitted by using uplink frequency domain resources. That is, uplink frequency domain resources may be configured in downlink slots or flexible slots, and uplink data can be transmitted through uplink frequency domain resources, so that the uplink transmission rate can be improved and the transmission delay of uplink data can be reduced. In addition, downlink frequency domain resources may be configured in uplink slots or flexible slots, and downlink data can be transmitted by using downlink frequency domain resources, so that a downlink transmission rate can be improved and transmission delay of downlink data can be reduced.

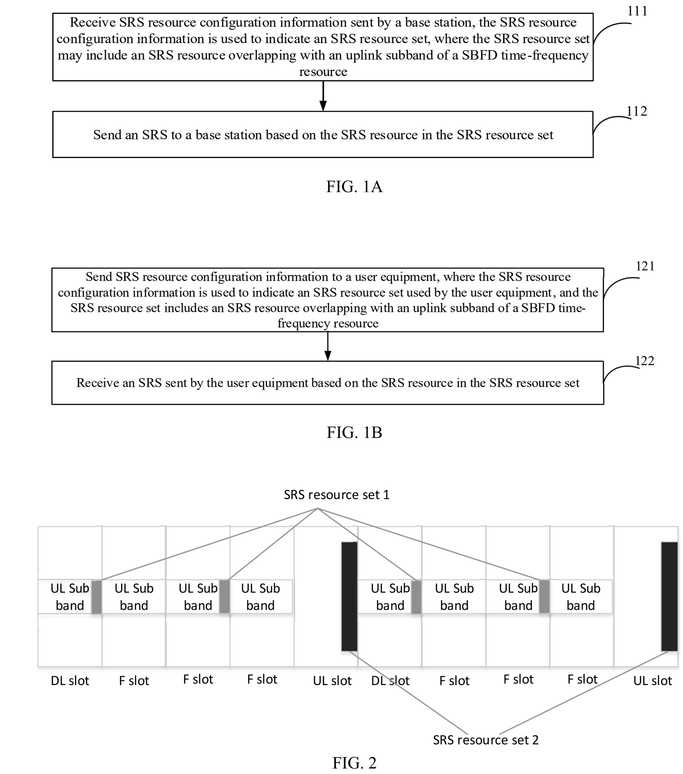

An example of the present disclosure provides an SRS transmission method, which can be performed by a user equipment. A schematic flowchart of an SRS transmission method is shown in FIG. 1A, and the method may include step 111 and step 112.

At step 111, SRS resource configuration information sent by a base station is received. The SRS resource configuration information is used to indicate an SRS resource set, where the SRS resource set may include an SRS resource overlapping with an uplink subband of a SBFD time-frequency resource, and the SRS resource may be an SRS time-frequency resource.

At step 112, an SRS is sent to a base station based on the SRS resource in the SRS resource set.

An example of the present disclosure provides an SRS transmission method, which can be performed by a base station. A schematic flowchart of an SRS transmission method is shown in FIG. 1B, and the method may include step 121 and step 122.

At step 121, SRS resource configuration information is sent to a user equipment, where the SRS resource configuration information is used to indicate an SRS resource set used by the user equipment, and the SRS resource set includes an SRS resource overlapping with an uplink subband of a SBFD time-frequency resource.

At step 122, an SRS sent by the user equipment is received based on the SRS resource in the SRS resource set.

In an example, the user equipment may correspond to a first SRS resource set and a second SRS resource set, and the base station may send first configuration information corresponding to the first SRS resource set and second configuration information corresponding to the second SRS resource set to the user equipment. The first configuration information is used to indicate the first SRS resource set, and the second configuration information is used to indicate the second SRS resource set. The first SRS resource set includes multiple first type of SRS resources which overlap with uplink subbands of SBFD time-frequency resources, and the second SRS resource set includes multiple second type of SRS resources which are located in uplink slots or uplink symbols.

In an example, the user equipment may correspond to a third SRS resource set, and the base station may send third configuration information corresponding to the third SRS resource set to the user equipment. The third configuration information is used to indicate the third SRS resource set. The third SRS resource set includes multiple third type of SRS resources, and the plurality of third type of SRS resources at least include an SRS resource that overlaps with an uplink subband of the SBFD time-frequency resource. The plurality of third type of SRS resources may be continuous SRS resources, or the plurality of third type of SRS resources may be discontinuous SRS resources located in different slots.

In an example, both the base station and the user equipment can acquire a preconfigured target bandwidth configuration list, and the target bandwidth configuration list may be generated based on an initial bandwidth configuration list. If the number of PRBs between a first physical layer resource and a second physical layer resource which are adjacent in the initial bandwidth configuration list is greater than a preset threshold, intermediate physical layer resource(s) is added to the initial bandwidth configuration list to obtain the target bandwidth configuration list, where the number of PRBs between the first physical layer resource and the intermediate physical layer resource is not greater than the preset threshold, and the number of PRBs between the intermediate physical layer resource and the second physical layer resource is not greater than the preset threshold. A physical layer resource may be a frequency domain resource of a physical layer, and the physical layer resource may also be called a bandwidth.

In an example, the user equipment sends the SRS to the base station based on the SRS resource in the first SRS resource set, which may include, but is not limited to, if a first type of SRS resource in the first SRS resource set does not exceed a range of the uplink subband of the SBFD time-frequency resource, the SRS may be sent to the base station according to the target bandwidth configuration list based on the first type of SRS resource in the first SRS resource set.

In an example, if the first type of SRS resource in the first SRS resource set includes a first partial resource not exceeding the range of the uplink subband of the SBFD time-frequency resource and a second partial resource exceeding the range of the uplink subband of the SBFD time-frequency resource, sending the SRS to the base station based on the SRS resource in the first SRS resource set may include, but is not limited to, sending the SRS to the base station based on the first partial resource of the first type of SRS resource, and sending the SRS to the base station based on the second partial resource of the first type of SRS resource.

Or, send the SRS to the base station based on the first partial resource of the first type of SRS resource, and prohibit UE sending the SRS to the base station based on the second partial resource of the first type of SRS resource.

Or, prohibit UE sending the SRS to the base station based on the first partial resource of the first type of SRS resource, and prohibit sending the SRS to the base station based on the second partial resource of the first type of SRS resource.

Or, if the SBFD time-frequency resource is configured in downlink slot(s) or downlink symbol(s), send the SRS based on the first partial resource of the first type of SRS resource, and prohibit sending the SRS to the base station based on the second partial resource of the first type of SRS resource; or, prohibit sending the SRS to the base station based on the first partial resource of the first type of SRS resource, and prohibit sending the SRS to the base station based on the second partial resource of the first type of SRS resource. Or, if the SBFD time-frequency resource is located in Flexible slot(s) or Flexible symbol(s), send the SRS to the base station based on the first partial resource of the first type of SRS resource, and send the SRS to the base station based on the second partial resource of the first type of SRS resource.

Or, SRS transmission indication information from the base station is received. If the SRS transmission indication information allows sending the SRS through the second partial resource, send the SRS to the base station based on the first partial resource of the first type of SRS resource, and send the SRS to the base station based on the second partial resource of the first type of SRS resource. If the SRS transmission indication information does not allow sending the SRS through the second partial resource, send the SRS to the base station based on the first partial resource of the first type of SRS resource, and prohibit sending the SRS to the base station based on the second partial resource of the first type of SRS resource; or, prohibit sending the SRS to the base station based on the first partial resource of the first type of SRS resource, and prohibit sending the SRS to the base station based on the second partial resource of the first type of SRS resource.

The SBFD time-frequency resource located in the downlink slot(s) refers to: configuring the SBFD time-frequency resource in the downlink slot(s), such as configuring the SBFD time-frequency resource in a symbol or multiple symbols of the downlink slot(s). The SBFD time-frequency resource located in the downlink symbol(s) refers to: configuring the SBFD time-frequency resource in the downlink symbol(s). The downlink symbol may be a downlink symbol in the downlink slot, a downlink symbol in the Flexible slot, or a downlink symbol in the uplink slot, and there is no restriction on this. The SBFD time-frequency resource located in the Flexible slot(s) refer to: configuring the SBFD time-frequency resource in the Flexible slot(s), such as configuring the SBFD time-frequency resource in a symbol or multiple symbols of the Flexible slot(s). The SBFD time-frequency resource located in the Flexible symbol(s) refer to: configuring the SBFD time-frequency resource in the Flexible symbol(s). The Flexible symbol may be a Flexible symbol in the downlink slot, a Flexible symbol in the Flexible slot, or a Flexible symbol in the uplink slot.

In an example, if prohibit sending the SRS to the base station based on the second partial resource of the first type of SRS resource, sending the SRS to the base station based on the first partial resource of the first type of SRS resource includes: determining target transmission power based on maximum transmission power; or, determining the target transmission power based on the maximum transmission power and a resource ratio; or, receiving transmission power indication information from a base station, if the transmission power indication information is first indication information, determining the target transmission power based on the maximum transmission power, and if the transmission power indication information is second indication information, determining the target transmission power based on the maximum transmission power and the resource ratio, where the resource ratio is a resource ratio of the first partial resource to the first type of SRS resource. The SRS is sent to the base station based on the first partial resource at the target transmission power.

In an example, for each of the second type of SRS resources in the second SRS resource set, if the uplink slot or the uplink symbol where the second type of SRS resource is located includes a downlink subband of the SBFD time-frequency resource, and the second type of SRS resource includes a third partial resource not located in a range of the downlink subband and a fourth part resource located in the range of the downlink subband; sending the SRS to the base station based on the SRS resource in the second SRS resource set may include, but is not limited to: sending the SRS to the base station based on the third partial resource of the second type of SRS resource, and prohibiting sending the SRS to the base station based on the fourth part resource of the second type of SRS resource.

Or, send the SRS to the base station based on the third partial resource of the second type of SRS resource, and sending the SRS to the base station based on the fourth part resource of the second type of SRS resource.

Or, prohibit sending the SRS to the base station based on the third partial resource of the second type of SRS resource, and prohibit sending the SRS to the base station based on the fourth part resource of the second type of SRS resource.

Or, if the third partial resource of the second type of SRS resource includes two discontinuous resources located on both sides of the downlink subband, send the SRS to the base station based on the two discontinuous resources, and prohibit sending the SRS to the base station based on the fourth part resource of the second type of SRS resource.

Or, if the third partial resource includes the two discontinuous resources located on both sides of the downlink subband, cascade the two discontinuous resources to obtain a continuous resource, send the SRS to the base station based on the continuous resource, and prohibit sending the SRS to the base station based on the fourth part resource of the second type of SRS resource.

In an example, sending the SRS to the base station based on the SRS resource in the third SRS resource set may include, but is not limited to, for each of the third type of SRS resources in the third SRS resource set, if the third type of SRS resources is located in an uplink slot or an uplink symbol, the SRS may be sent to the base station based on the third type of SRS resource. Or, if the third type of SRS resource is located in a downlink slot, a downlink symbol, a Flexible slot or a Flexible symbol, and the third type of SRS resource is located within the uplink subband of the SBFD time-frequency resource, the SRS may be sent to the base station based on the third type of SRS resource. Moreover, if the third type of SRS resource includes a fifth part resource not exceeding the range of the uplink subband and a sixth part resource exceeding the range of the uplink subband, the SRS may be sent to the base station based on the fifth part resource and/or the sixth part resource.

In an example, sending the SRS to the base station based on the fifth part resource and/or the sixth part resource may include, but is not limited to, sending the SRS to the base station based on the fifth part resource and sending the SRS to the base station based on the sixth part resource.

Or, send the SRS to the base station based on the fifth part resource, and prohibit sending the SRS to the base station based on the sixth part resource.

Or, prohibit sending the SRS to the base station based on the fifth part resource, and prohibit sending the SRS to the base station based on the sixth part resource.

Or, if the SBFD time-frequency resource is located in downlink slot(s) or downlink symbol(s), send the SRS to the base station based on the fifth part resource, and prohibit sending the SRS to the base station based on the sixth part resource; or, prohibit sending the SRS to the base station based on the fifth part resource, and prohibit sending the SRS to the base station based on the sixth part resource. Or, if the SBFD time-frequency resource is located in Flexible slot(s) or Flexible symbol(s), send the SRS to the base station based on the fifth part resource, and send the SRS to the base station based on the sixth part resource.

Or, receive SRS transmission indication information from the base station. If the SRS transmission indication information allows sending the SRS through the sixth part resource, send the SRS to the base station based on the fifth part resource, and send the SRS to the base station based on the sixth part resource. If the SRS transmission indication information does not allow sending the SRS through the sixth part resource, send the SRS to the base station based on the fifth part resource, and prohibit sending the SRS to the base station based on the sixth part resource; or, prohibit sending the SRS to the base station based on the fifth part resource, and prohibit sending the SRS to the base station based on the sixth part resource.

In an example, the base station may further send SRS resource indication information to the user equipment, and the user equipment receives the SRS resource indication information from the base station. The SRS resource indication information is used to indicate that it is allowed to send the SRS in the SRS resource overlapping with the uplink subband of the SBFD time-frequency resource, or it is prohibited to send the SRS in the SRS resource overlapping with the uplink subband of the SBFD time-frequency resource.

It can be seen from the above technical solutions that UE uses the SRS resource(s) in the SRS resource set(s) for SRS transmission, and when a SBFD time-frequency resource overlaps with the SRS resource, the SBFD time-frequency resource may be used for the SRS transmission, which may improve uplink data transmission reliability and cell coverage radius, enhance the accuracy of downlink beamforming and the real-time performance of beam tracking, and reduce uplink and downlink interference caused by an introduction of SBFD time-frequency resource, so that SBFD time-frequency resource assignment and SRS transmission mechanism can be effectively combined and implemented. From the perspective of a system, it can support SRS transmission of a TDD system, improve resource utilization, improve network coverage and network capacity, increase uplink transmission resources and cell coverage, reduce uplink transmission delay and increase uplink transmission capacity.

The above technical solutions of the present disclosure are described below in connection with examples.

A TDD frame structure can be completed by semi-persistent configuration and dynamic indication. Multiple slot format combinations (SFCs) are defined in higher layer signalling by means of a slot format indicator (SFI), for example, the base station can select slot formats that satisfy service requirements and add these slot formats to the SFCs. Some slot formats can be seen in Table 1, where D represents a DL symbol, U represents a UL symbol, and F represents a flexible symbol. For each SFC, it is identified by a fixed ID and contains one or more slot format types.

**Table 1**

| Slot format index | Symbol in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| ... | ... | | | | | | | | | | | | | |
| 55 | D | D | F | F | F | U | U | U | D | D | D | D | D | D |
| 56 - 254 | Reserved | | | | | | | | | | | | | |
| 255 | UE determines the slot format based on *tdd-UL-DL-Configuration Common, tdd-UL-DL-ConfigurationDedicated* and DCI formats | | | | | | | | | | | | | |

After completing the SFI configuration, the base station sends multiple slot format combinations to the UE in an RRC message. After configuring multiple slot format combinations via the RRC signaling, the base station informs the UE of an index of a currently used SFC in DCI format 2_0 through periodic PDCCHs. After the UE correctly receives the information of DCI format 2_0, the UE determines a slot format of each slot in a certain period according to a value of the SFC index. So far, the base station and UE can complete the configuration of the frame structure through dynamic indication, and can perform uplink and downlink data transmission.

For resource allocation, it can be divided into time domain resource allocation and frequency domain resource allocation (taking resource allocation of downlink channels as an example). Time domain resource allocation: a Time domain resource assignment field in DCI indicates a time domain position of the downlink channel. This field consists of 4 bits with values ranging from 0 to 15. Assuming a value of m, m+1 indicates a row index to a time domain resource allocation table, and information in this indexed row indicates time domain resources for a PDSCH. There are two ways for indication. One is to indicate three pieces of information: a slot offset between a PDSCH and a PDCCH scheduling that PDSCH, a start symbol of the PDSCH in a slot, and an allocation symbol length of the PDSCH. The other is the slot offset between the PDSCH and the PDCCH scheduling that PDSCH, a start and length indicator (SLIV), and the user equipment calculates a start symbol and the number of consecutive symbols of the PDSCH based on the SLIV.

Frequency domain resource allocation: a Frequency domain resource assignment field in DCI indicates frequency domain resource allocation for the downlink channel. PDSCH frequency domain resource allocation is categorized into Type 0 and Type 1, where Type 0 supports discontinuous resource allocation to obtain frequency diversity gain, Type 1 supports continuous resource allocation, which can reduce the number of bits required for this field, and DCI format 1_0 only supports Type 1. Type 0: for the discontinuous resource allocation type, a resource block group (RBG) is a virtual resource block (VRB) group, which consists of P consecutive VRBs, and the number is determined by a higher layer parameter rbg-Size and a size of a BWP. Under the resource allocation type of Type 0, Frequency domain resource assignment is used as a bitmap to indicate which RBGs are allocated to the downlink channel, each bit in the bitmap represents an RBG, a highest bit corresponds to RBG0, and so on, a bit is 1 indicating that the RBG is allocated to the downlink channel, and a bit is 0 indicating that it is not a downlink channel resource. Type 1: a frequency domain resource indication field does not serve as a bitmap, but indicates a Resource Indicator Value (RIV), by which the user equipment calculates a starting resource block (RB) and the number of occupied RBs of the downlink channel.

In the TDD system, a frame structure may be divided into UL slots, DL slots and flexible slots. Symbols in a flexible slot can be configured as UL symbols, DL symbols and Flexible symbols, and Flexible symbols can be used for UL, DL or GP. Uplink data can be transmitted in a UL slot, or a UL symbol or a Flexible symbol in a flexible slot, and the uplink data cannot be transmitted in a DL slot or a DL symbol in the flexible slot. Similarly, downlink data can be transmitted in the DL slot, or a DL symbol or the Flexible symbol in the flexible slot, and the downlink data cannot be transmitted in the UL slot or the UL symbol in the flexible slot.

A full-duplex communication can be realized by SBFD, that is, SBFD time-frequency resources can be configured in time-frequency resources (such as UL slots, DL slots and flexible slots), so that data in different directions from other time-frequency resources can be transmitted on the SBFD time-frequency resources at the same moment. For example, an SBFD time-frequency resource can be configured in a DL slot, and uplink data can be transmitted through the SBFD time-frequency resource, so that the uplink data can be transmitted in the DL slot. For another example, an SBFD time-frequency resource can be configured in a DL symbol of a flexible slot, and uplink data can be transmitted through the SBFD time-frequency resource, so that the uplink data can be transmitted in the DL symbol of the flexible slot. For another example, an SBFD time-frequency resource can be configured in a UL slot, and downlink data is transmitted through the SBFD time-frequency resource, so that the downlink data is transmitted in the UL slot. For another example, an SBFD time-frequency resource can be configured in a UL symbol of a flexible slot, and downlink data can be transmitted through the SBFD time-frequency resource, so that downlink data can be transmitted in the UL symbol of the flexible slot.

In an example, the SBFD time-frequency resource can be a time-frequency resource corresponding to an SBFD slot or a time-frequency resource corresponding to an SBFD symbol, and the SBFD symbol can be defined as a symbol configured with SBFD subband(s) for the base station and the UE, and in the SBFD subbands of these SBFD symbols (called SBFD time-frequency resources), the base station and the UE can perform full-duplex communication, i.e., in the SBFD time-frequency resources, uplink transmissions, downlink transmissions, or simultaneous uplink and downlink transmissions can be performed. An SBFD time-frequency resource can be clearly indicated as uplink, downlink or Flexible. When an SBFD time-frequency resource is indicated as Flexible, uplink or downlink can be flexibly scheduled in the SBFD time-frequency resource. If the SBFD time-frequency resource is not clearly indicated, it means that it is Flexible, and can be used to transmit uplink or downlink data. Configurations of SBFD slots or SBFD symbols can include: which symbols in DL slots, UL slots and Flexible slots can be used for SBFD transmission, as well as a period and a start point of the implementation. For convenience of description, in the following embodiments, the SBFD time-frequency resource is taken as a time-frequency resource corresponding to an SBFD slot as an example.

In an example, SBFD indicated as uplink is called UL-SBFD, that is, the SBFD time-frequency resource is used for uplink, and SBFD indicated as downlink is called DL-SBFD, that is, the SBFD time-frequency resource is used for downlink. In order to support FD communication, the SBFD time-frequency resource can be configured semi-persistently, such as via radio resource control (RRC) signalling, and the SBFD time-frequency resource can also be dynamically configured, such as via downlink control information (DCI).

The SBFD time-frequency resource can be configured in a DL symbol, a Flexible symbol and a UL symbol. A symbol configured with an SBFD time-frequency resource is called an SBFD symbol, and the other symbols without SBFD time-frequency resource are called normal symbols, that is, non-SBFD symbols are called normal symbols, such as UL symbols, DL symbols and Flexible symbols. SBFD can be configured in some symbols of a certain slot, that is, some symbols of a slot are SBFD symbols, and the rest are normal symbols, so that DL or UL data transmission may cross the normal symbols or the SBFD symbols.

In an example, the UE may send an SRS to the base station, and the SRS is used to detect channel quality of an uplink frequency band. In a full-duplex mode of TDD, an SRS resource allocation method is proposed. After configuring the SBFD time-frequency resource(s), if the SRS resource(s) overlaps with the SBFD time-frequency resource(s), an SRS transmission scheme between the UE and the base station is given, which can simultaneously assign SRS resources to SBFD slots /SBFD symbols and non-SBFD slots/non-SBFD symbols (i.e., common slots/normal symbols), so that the UE and the base station can transmit the SRS in SBFD slots or SBFD symbols, which will be explained in the following combined with specific situations.

Case 1: An SRS resource set is configured separately for SBFD slots or SBFD symbols, which can be recorded as a first SRS resource set.

Referring to FIG. 2, a schematic diagram of configuring an SRS resource set for SBFD slots or SBFD symbols is shown, SRS resource set 1 is the first SRS resource set, SRS resource set 1 is an SRS resource set configured for SBFD slots or SBFD symbols, SRS resource set 2 is a second SRS resource set, and SRS resource set 2 is an SRS resource set configured for non-SBFD slots or non-SBFD symbols.

Referring to FIG. 2, SBFD time-frequency resources may be configured in DL slots and/or Flexible slots, and a DL slot and/or a Flexible slot configured with an SBFD time-frequency resource is referred to as an SBFD slot; or, SBFD time-frequency resources may be configured in DL symbols and/or Flexible symbols, and a DL symbol and/or a Flexible symbol configured with an SBFD time-frequency resource is referred to as an SBFD symbol. The SBFD time-frequency resource in the SBFD slot or the SBFD symbol may be used to indicate uplink, i.e., the SBFD time-frequency resource may be a UL subband. Based on this, an SRS resource can be configured in an uplink subband of the SBFD time-frequency resource, i.e., the SRS resource set 1 includes multiple SRS resources, which can be called the first type of SRS resources for convenience of distinction, and the plurality of first type of SRS resources overlap with uplink subbands of SBFD time-frequency resources.

Referring to FIG. 2, the SRS resources can further be configured in UL slots or UL symbols, i.e., the SRS resource set 2 includes multiple SRS resources, which can be called the second type of SRS resources for convenience of distinction, and the plurality of second type of SRS resources are located in uplink slots or uplink symbols.

Referring to the above scenario, the base station allocates SRS resource set 1 and SRS resource set 2 to the UE, where the SRS resource set 1 includes multiple first type of SRS resources that overlap with the uplink subbands of SBFD time-frequency resources, and the SRS resource set 2 includes multiple second type of SRS resources that are located in uplink slots or uplink symbols.

The base station may send first configuration information corresponding to SRS resource set 1 and second configuration information corresponding to SRS resource set 2 to the UE. After receiving the first configuration information and the second configuration information, the UE determines the SRS resource set 1 based on the first configuration information and determines the SRS resource set 2 based on the second configuration information. The first configuration information and the second configuration information can be sent separately or simultaneously, and sending modes can be flexibly set. The first configuration information may be dynamic resource configuration information, or may be semi-persistent resource configuration information, and the second configuration information may be dynamic resource configuration information, or may be semi-persistent resource configuration information.

In an example, after obtaining the SRS resource set 1, the UE can send the SRS to the base station based on the first type of SRS resources in the SRS resource set 1, and the base station receives the SRS sent by the UE based on the first type of SRS resources in the SRS resource set 1. After obtaining the SRS resource set 2, the UE can send the SRS to the base station based on the second type of SRS resources in the SRS resource set 2, and the base station receives the SRS sent by the UE based on the second type of SRS resources in the SRS resource set 2.

In an example, for a first type of SRS resource in SRS resource set 1, it is only allowed that the first type of SRS resource does not exceed a range of an uplink subband of the SBFD time-frequency resource, i.e., the first type of SRS resource is completely within the uplink subband of SBFD time-frequency resource, i.e., the first type of SRS resource is smaller than the uplink subband of the SBFD time-frequency resource. In this case, scheduling flexibility of the base station may be reduced. If only one SRS resource set 1 is configured and frequency hopping is not configured, physical resource blocks (PRBs) of some uplink subbands cannot be covered by SRS resources, which results in the accuracy of downlink beamforming of the base station being reduced and channel states of these PRBs not being accurately obtained.

In view of the above findings, the base station and the UE can further acquire a preconfigured target bandwidth configuration list, for example, the base station generates the target bandwidth configuration list and sends it to the UE, or the base station and the UE configure the target bandwidth configuration list by default, and there is no restriction on this.

The target bandwidth configuration list can be generated based on an initial bandwidth configuration list. For example, if the number of PRBs between a first physical layer resource and a second physical layer resource which are adjacent in the initial bandwidth configuration list is greater than a preset threshold, an intermediate physical layer resource is added to the initial bandwidth configuration list to obtain the target bandwidth configuration list. The number of PRBs between the first physical layer resource and the intermediate physical layer resource is not greater than the preset threshold, and the number of PRBs between the intermediate physical layer resource and the second physical layer resource is not greater than the preset threshold.

For example, taking the preset threshold as 4 as an example, if the number of PRBs between two adjacent physical layer resources (the first physical layer resource and the second physical layer resource) is greater than 4 and less than or equal to 8, an intermediate physical layer resource is inserted for the first physical layer resource and the second physical layer resource, the number of PRBs between the first physical layer resource and the intermediate physical layer resource is not greater than 4, and the number of PRBs between the intermediate physical layer resource and the second physical layer resource is not greater than 4. If the number of PRBs between the first physical layer resource and the second physical layer resource is greater than 8, at least two intermediate physical layer resources (such as 2, 3, etc.) are inserted for the first physical layer resource and the second physical layer resource, so that the number of PRBs between two adjacent physical layer resources is not greater than 4. After the initial bandwidth configuration list is processed as described above, the target bandwidth configuration list can be obtained. When the base station and the UE process based on the target bandwidth configuration list, even if the first type of SRS resource does not exceed the range of the uplink subband of the SBFD time-frequency resource, it has little influence on the base station to evaluate the channel states and form downlink beams.

When the base station processes based on the target bandwidth configuration list, the base station can send the first configuration information and the second configuration information to the UE based on the target bandwidth configuration list, i.e., SRS resources indicated by the first configuration information meet bandwidth requirements of the target bandwidth configuration list, SRS resources indicated by the second configuration information meet bandwidth requirements of the target bandwidth configuration list, and there is no restriction on this.

When the UE processes based on the target bandwidth configuration list, the UE can send the SRS to the base station based on the target bandwidth configuration list. For example, if the first type of SRS resource in the first SRS resource set does not exceed the range of the uplink subband of the SBFD time-frequency resource, the UE may send the SRS to the base station according to the target bandwidth configuration list based on the first type of SRS resource in the first SRS resource set.

Table 2 is an example of the initial bandwidth configuration list.

**Table 2**

| C_{SRS} | B_{SRS}=0 | | B_{SRS}=1 | | B_{SRS}=2 | | B_{SRS}=3 | |
|---|---|---|---|---|---|---|---|---|
| | m_{SRS, 0} | N ₀ | m_{SRS, 1} | N ₁ | m_{SRS, 2} | N ₂ | m_{SRS, 3} | N ₃ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

Based on the initial bandwidth configuration list, since the number of PRBs between physical layer resource 40 and physical layer resource 48 is equal to 8, physical layer resource 44 is inserted for the physical layer resource 40 and the physical layer resource 48, the number of PRBs between the physical layer resource 40 and the physical layer resource 44 is equal to 4, and the number of PRBs between the physical layer resource 44 and the physical layer resource 48 is equal to 4, so the physical layer resource 44 can be located behind existing 64 physical layer resource configurations. Similarly, physical layer resource 68 can be inserted for physical layer resource 64 and physical layer resource 72, which can be located behind the existing 64 physical layer resource configurations. Physical layer resource 84 can be inserted for physical layer resource 80 and physical layer resource 88, which can be located behind the existing 64 physical layer resource configurations. By analogy, multiple physical layer resources can be inserted into the initial bandwidth configuration list to obtain the target bandwidth configuration list. An example of the target bandwidth configuration list can be seen in Table 3. Of course, only three inserted physical layer resources are shown here, and the number of inserted physical layer resources can be more, which is not limited.

**Table 3**

| C_{SRS} | B_{SRS}=0 | | B_{SRS}=1 | | B_{SRS}=2 | | B_{SRS}=3 | |
|---|---|---|---|---|---|---|---|---|
| | m_{SRS, 0} | N ₀ | m_{SRS, 1} | N ₁ | m_{SRS, 2} | N ₂ | m_{SRS, 3} | N ₃ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| ... | ... | ... | ... | ... | ... | ... | ... | ... |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |
| 64 | 44 | 1 | 22 | 2 | 11 | 2 | 4 | 1 |
| 65 | 68 | 1 | 34 | 2 | 17 | 2 | 4 | 4 |
| 66 | 84 | 1 | 42 | 2 | 7 | 6 | 4 | 1 |
| ... | ... | ... | ... | ... | ... | ... | ... | ... |

In Table 2 and Table 3, C_{SRS} is a serial number of a physical layer resource configuration, and B_{SRS} is a transmission bandwidth configuration, that is, there are four transmission bandwidth configurations, namely B_{SRS}=0, 1, 2 and 3, m_{SRS} is a bandwidth per transmission, and N is the number of frequency modulations. There is no restriction on how to use Table 2 and Table 3 for processing.

In an example, for a first type of SRS resource in SRS resource set 1, it is allowed that the first type of SRS resource exceeds a range of an uplink subband of the SBFD time-frequency resource, i.e., the first type of SRS resource configured by the base station is allowed to exceed the range of the uplink subband of the SBFD time-frequency resource (located in a DL/Flexible slot or a DL/Flexible symbol), i.e., the first type of SRS resource includes a first partial resource that does not exceed the range of the uplink subband of the SBFD time-frequency resource and a second partial resource that exceeds the range of the uplink subband of the SBFD time-frequency resource. Based on this, the UE sends the SRS to the base station based on the first type of SRS resource in the first SRS resource set, which can include but is not limited to the following.

Manner 11, the UE sends the SRS based on the first partial resource of the first type of SRS resource, and sends the SRS based on the second partial resource of the first type of SRS resource.

For example, if the SBFD time-frequency resource is located in a downlink slot or a downlink symbol, or if the SBFD time-frequency resource is located in a Flexible slot or a Flexible symbol, the UE is allowed to send the SRS on a resource exceeding the uplink subband of the SBFD time-frequency resource, and the UE sends the SRS to the base station based on the first partial resource and the second partial resource of the first type of SRS resource. For example, based on the first partial resource and the second partial resource of the first type of SRS resource, the UE can send the SRS to the base station based on the initial bandwidth configuration list or the target bandwidth configuration list.

Manner 12, the UE sends the SRS based on the first partial resource of the first type of SRS resource, and prohibits sending the SRS to the base station based on the second partial resource of the first type of SRS resource.

For example, if the SBFD time-frequency resource is located in a downlink slot or a downlink symbol, or if the SBFD time-frequency resource is located in a Flexible slot or a Flexible symbol, the UE is not allowed to send an SRS on a resource exceeding the uplink subband of the SBFD time-frequency resource. The UE sends the SRS to the base station based on the first partial resource the first type of SRS resource, and prohibits sending the SRS to the base station based on the second partial resource of the first type of SRS resource.

Manner 13, the UE prohibits sending the SRS to the base station based on the first partial resource of the first type of SRS resource, and prohibits sending the SRS to the base station based on the second partial resource of the first type of SRS resource.

**For** example, if the first type of SRS resource includes the second partial resource that exceeds the range of the uplink subband of SBFD time-frequency resource, it is considered that the configuration is wrong, and therefore, sending the SRS to the base station is prohibited.

Manner 14, if the SBFD time-frequency resource is located in a downlink slot or a downlink symbol, the UE may send the SRS to the base station based on the first partial resource of the first type of SRS resource, and prohibit sending the SRS to the base station based on the second partial resource of the first type of SRS resource; or, the UE prohibits sending the SRS to the base station based on the first partial resource of the first type of SRS resource, and prohibits sending the SRS to the base station based on the second partial resource of the first type of SRS resource. Or, if the SBFD time-frequency resource is located in a Flexible slot or a Flexible symbol, UE may send the SRS to the base station based on the first partial resource of the first type of SRS resource, and send the SRS to the base station based on the second partial resource of the first type of SRS resource.

For example, if the SBFD time-frequency resource is located in a downlink slot or a downlink symbol, the UE is not allowed to send the SRS on a resource exceeding the uplink subband of the SBFD time-frequency resource. Based on this, the UE may send the SRS to the base station based on the first partial resource of the first type of SRS resource, and prohibits sending the SRS to the base station based on the second partial resource of the first type of SRS resource. Or, the UE prohibits sending the SRS to the base station based on the first partial resource and the second partial resource of the first type of SRS resource. Or, if the SBFD time-frequency resource is located in a Flexible slot or a Flexible symbol, the UE is allowed to send the SRS on a resource exceeding the uplink subband of the SBFD time-frequency resource. Based on this, the UE may send the SRS to the base station based on the first partial resource of the first type of SRS resource, and send the SRS to the base station based on the second partial resource of the first type of SRS resource.

Manner 15, the UE receives SRS transmission indication information from the base station. If the SRS transmission indication information allows sending the SRS through the second partial resource, the UE can send the SRS to the base station based on the first partial resource of the first type of SRS resource, and send the SRS to the base station based on the second partial resource of the first type of SRS resource. Or, if the SRS transmission indication information does not allow sending the SRS through the second partial resource, the UE can send the SRS to the base station based on the first partial resource of the first type of SRS resource, and prohibit sending the SRS to the base station based on the second partial resource of the first type of SRS resource; or, the UE prohibits sending the SRS to the base station based on the first partial resource of the first type of SRS resource, and prohibits sending the SRS to the base station based on the second partial resource of the first type of SRS resource.

For example, the base station can indicate whether the UE is allowed to send the SRS on a resource exceeding the uplink subband of SBFD time-frequency resource via signalling (such as 1 or 2 bit signalling, referred to as SRS transmission indication information). For example, the base station can send the SRS transmission indication information to the UE via a DCI message, or the base station can send the SRS transmission indication information to the UE via an MAC CE message, or the base station can send the SRS transmission indication information to the UE via an RRC message.

If the SBFD time-frequency resource is located in the downlink slot, the downlink symbol, the Flexible slot or a Flexible symbol, and if this SRS transmission indication information is used to allow the UE to send an SRS on a resource exceeding the uplink subband of the SBFD time-frequency resource, the UE sends the SRS to the base station based on the first partial resource and the second partial resource of the first type of SRS resource. If the SRS transmission indication information is used to disallow the UE to send the SRS on a resource exceeding the uplink subband of the SBFD time-frequency resource, the UE sends the SRS to the base station based on the first partial resource of the first type of SRS resource, and prohibits sending the SRS to the base station based on the second partial resource of the first type of SRS resource; or, the UE prohibits sending the SRS to the base station based on the first partial resource and the second partial resource.

In an example, for Manner 12, Manner 14 and Manner 15, if the UE is not allowed to send the SRS on a resource exceeding the uplink subband of SBFD time-frequency resource, for example, the UE sends the SRS to the base station based on the first partial resource, and prohibits sending the SRS to the base station based on the second partial resource, transmission power of SRS can further be controlled. For example, the transmission power of SRS can be controlled in the following manners.

Manner 21, the UE determines target transmission power based on maximum transmission power. The UE sends the SRS to the base station based on the first partial resource of the first type of SRS resource at the target transmission power.

For example, the maximum transmission power is denoted as SRS Pmax, which is transmission power matched with the first type of SRS resource (the first partial resource and the second partial resource). In Manner 21, the SRS is sent according to SRS Pmax, thereby increasing the transmission power of SRS and enhancing the uplink coverage.

Manner 22, the UE determines the target transmission power based on the maximum transmission power and a resource ratio, where the resource ratio may be a resource ratio of the first partial resource to the first type of SRS resource. The UE sends the SRS to the base station based on the first partial resource of the first type of SRS resource at the target transmission power.

For example, the resource ratio is available PRB/total allocated PRB, where the available PRB represents the number of PRBs occupied by the first partial resource, and total allocated PRB represents the number of PRBs occupied by the first type of SRS resource (the first partial resource and the second partial resource). In Manner 22, the SRS is sent according to SRS Pmax * (available PRB/total allocated PRB), thereby reducing interference to the downlink channel.

Manner 23, the UE receives transmission power indication information from the base station. If the transmission power indication information is first indication information, determine the target transmission power based on the maximum transmission power, and if the transmission power indication information is second indication information, determine the target transmission power based on the maximum transmission power and the resource ratio.

For example, the base station may indicate the manner in which the target transmission power is to be determined via signalling (e.g., 1-bit signalling, referred to as a transmission power indication message), e.g., the base station may send the transmission power indication message to the UE by means of a DCI message or, by means of a MAC CE message, or, by means of an RRC message, to the UE.

If the transmission power indication information is the first indication information (such as a first value, such as 0), and the first indication information indicates that the target transmission power is determined based on the maximum transmission power, the UE sends the SRS according to the SRS Pmax.

Or, if the transmission power indication information is the second indication information (such as a second value, such as 1), and the second indication information indicates that the target transmission power is determined based on the maximum transmission power and the resource ratio, the UE sends the SRS according to SRS Pmax * (available PRB/total allocated PRB).

In an example, for the second type of SRS resources in SRS resource set 2, the second type of SRS resources can be configured in UL slots or UL symbols. If there is no SBFD time-frequency resource in the UL slot or UL symbol, the UE can send the SRS to the base station based on the second type of SRS resources.

If there are SBFD time-frequency resources in the UL slots or UL symbols, and the SBFD time-frequency resources are used to indicate downlink, that is, the SBFD time-frequency resources are DL subbands, and the second type of SRS resources do not overlap with the downlink subbands of the SBFD time-frequency resources, the UE sends the SRS to the base station based on the second type of SRS resources.

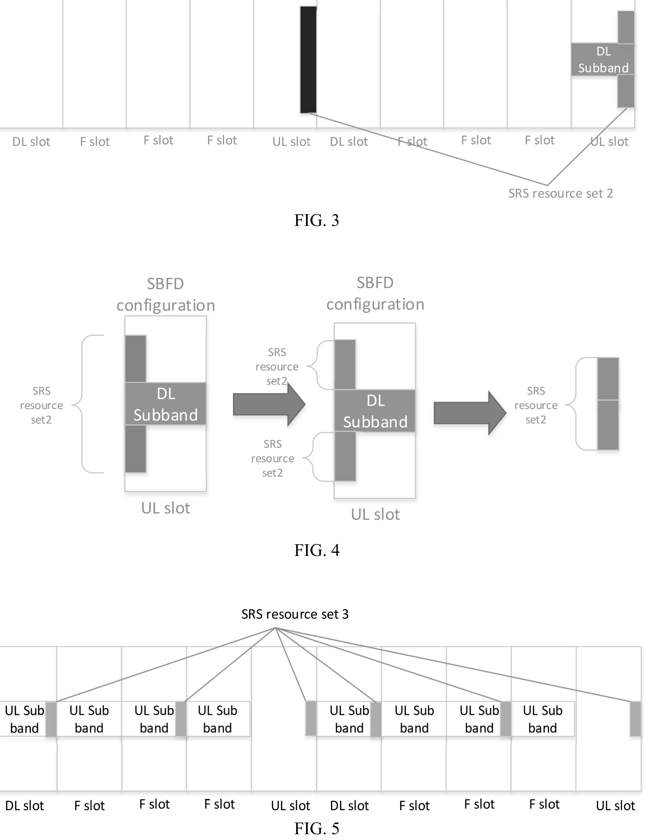

In an example, as shown in FIG. 3, it is a schematic diagram of configuring an SRS resource set for UL slots or UL symbols. If there is an SBFD time frequency resource in a UL slot or a UL symbol, the SBFD time frequency resource is used to indicate downlink, that is, the SBFD time frequency resource is downlink subband, and a second type of SRS resource overlaps with the downlink subband of the SBFD time frequency resource, i.e., the second type of SRS resource includes a third partial resource not within a range of the downlink subband and the fourth part resource within the range of the downlink subband. Based on this, the UE sends the SRS to the base station based on the second type of SRS resource in the second SRS resource set, which can include but is not limited to the following.

Manner 31, the UE sends the SRS based on the third partial resource of the second type of SRS resource, and prohibits sending the SRS to the base station based on the fourth part resource of the second type of SRS resource.

For example, the UE is not allowed to send the SRS in the downlink subband of the SBFD time-frequency resource, i.e., it only sends a partial SRS. Based on this, the UE may send the SRS to the base station based on the third partial resource of the second type of SRS resource, and prohibit sending the SRS to the base station based on the fourth part resource of the second type of SRS resource.

Manner 32, the UE sends the SRS based on the third partial resource of the second type of SRS resource, and sends the SRS based on the fourth part resource of the second type of SRS resource.

For example, the UE is allowed to send the SRS in the downlink subband of the SBFD time-frequency resource, i.e., all SRS is allowed to be sent, even an SRS within the downlink subband of the SBFD time-frequency resource will also be sent. Based on this, the UE may send the SRS to the base station based on the third partial resource and the fourth part resource of the second type of SRS resource.

Manner 33, the UE prohibits sending the SRS to the base station based on the third partial resource of the second type of SRS resource, and prohibits sending the SRS to the base station based on the fourth part resource of the second type of SRS resource.

For example, if the second type of SRS resource includes the fourth part resource within the range of the downlink subband of the SBFD time-frequency resource, it is considered that the configuration is wrong, and therefore, the UE prohibits sending the SRS to the base station based on the second type of SRS resource.

Manner 34, if the third partial resource includes two discontinuous resources located on both sides of the downlink subband, the UE cascades the two discontinuous resources to obtain a continuous resource, sends the SRS based on the continuous resource, and prohibits sending the SRS to the base station based on the fourth part resource of the second type of SRS resource.

For example, as shown in FIG. 4, it is a schematic diagram of discontinuous SRS resources. The third partial resource includes a resource located on an upper side of the DL subband (denoted as resource a1) and a resource located on a lower side of the DL subband (denoted as resource a2), and the resource a1 and the resource a2 are two discontinuous resources. Based on this, the UE can cascade the resource a1 and the resource a2, that is, eliminate the resources in the DL subband to obtain a continuous resource, which includes the resource a1 and the resource a2, so that the UE can send the SRS to the base station based on the continuous resource.

The base station and the UE can pre-configure a resource cascade indication, and the resource cascade indication is used to indicate whether to perform resource cascade. Or, the base station may send the resource cascade indication to the UE, and the resource cascade indication is used to indicate whether to perform resource cascade. If the resource cascade indication is used to indicate performing resource cascade, the UE can cascade two discontinuous resources to obtain the continuous resource, and send the SRS to the base station based on the continuous resource. If the resource cascade indication is used to indicate not performing resource cascade, the UE can send the SRS to the base station based on two discontinuous resources without cascading the two discontinuous resources.

Manner 35, if the third partial resource of the second type of SRS resource includes two discontinuous resources located on both sides of the downlink subband, the UE sends the SRS based on the two discontinuous resources, and prohibits sending the SRS to the base station based on the fourth part resource of the second type of SRS resource.

For example, as shown in FIG. 4, the third partial resource includes the resource a1 located on the upper side of the downlink subband and the resource a2 located on the lower side of the downlink subband, and the resource a1 and the resource a2 are two discontinuous resources. Based on this, SRS discontinuous resource allocation can be performed, that is, UE sends the SRS to the base station based on two discontinuous resources. A signalling design that allows the configuration of two SRS frequency domain resources can be as follows:

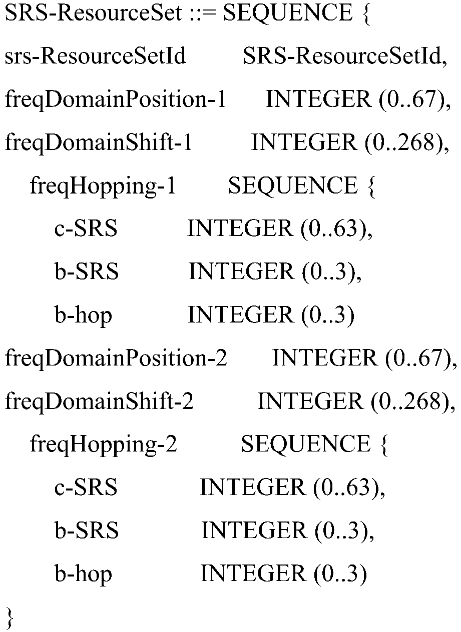

In the above signalling design, positions of two discontinuous resources (such as resource a1 and resource a2) can be indicated, and the SRS can be sent based on the position of resource a1 and the SRS can be sent based on the position of resource a2.

The above Manner 31, Manner 32, Manner 33, Manner 34 and Manner 35 can be flexibly switched through signalling. For example, the base station can send signalling to the UE, indicating that the UE is to be processed using Manner 31, or that the UE is to be processed using Manner 32, or that the UE is to be processed using Manner 33, or that the UE is to be processed using Manner 34, or that the UE is to be processed using Manner 35.

In an example, if the UE sends the SRS to the base station based on the third partial resource and prohibits sending the SRS to the base station based on the fourth part resource, the transmission power of SRS can be controlled. For example, the UE determines the target transmission power based on the maximum transmission power (transmission power matched with the second type of SRS resources), and the UE sends the SRS to the base station based on the third partial resource at the target transmission power.

Or, the UE determines the target transmission power based on the maximum transmission power and the resource ratio, which can be a resource ratio of the third partial resource to the second type of SRS resource. The UE sends the SRS to the base station based on the third partial resource at the target transmission power.

Or, the UE receives the transmission power indication information from the base station, if the transmission power indication information is the first indication information, determine the target transmission power based on the maximum transmission power, and if the transmission power indication information is the second indication information, determine the target transmission power based on the maximum transmission power and the resource ratio. The UE sends the SRS to the base station based on the third partial resource at the target transmission power.

Case 2: Configure an SRS resource set for SBFD slots /SBFD symbols and non-SBFD slots/non-SBFD symbols, and record the SRS resource set as a third SRS resource set.

As shown in FIG. 5, it is a schematic diagram of configuring an SRS resource set for SBFD slots/SBFD symbols and non-SBFD slots/non-SBFD symbols, SRS resource set 3 is the third SRS resource set. The SBFD time-frequency resource includes UL subbands, and SRS resources are configured in uplink subbands of the SBFD time-frequency resources, i.e., the SRS resource set 3 includes multiple third type of SRS resources, and the third type of SRS resources overlap with the uplink subbands of SBFD time-frequency resources. And/or, the SRS resources are configured in UL slots or UL symbols, i.e., the SRS resource set 3 includes multiple third type of SRS resources, and the third type of SRS resources are located in uplink slots or uplink symbols.

Referring to the above scenario, the base station allocates SRS resource set 3 to the UE, where the SRS resource set 3 includes multiple third type of SRS resources that overlap with the uplink subbands of SBFD time-frequency resources, and/or, the SRS resource set 3 includes multiple third type of SRS resources that are located in uplink slots or uplink symbols.

The base station may send third configuration information corresponding to SRS resource set 3 to the UE. After receiving the third configuration information, the UE determines the SRS resource set 3 based on the third configuration information. The third configuration information is dynamic resource configuration information or semi-persistent resource configuration information. After obtaining the SRS resource set 3, the UE can send the SRS to the base station based on the third type of SRS resources in the SRS resource set 3, and the base station receives the SRS based on the third type of SRS resources in the SRS resource set 3.

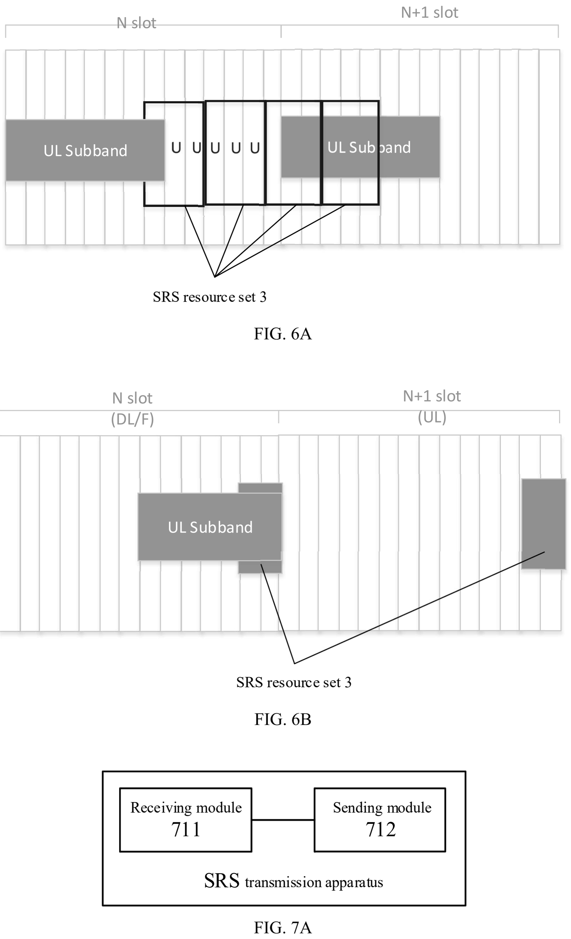

In an example, the plurality of third type of SRS resources in the SRS resource set 3 may be continuous SRS resources, as shown in FIG. 6A, which is a schematic diagram that the plurality of third type of SRS resources are continuous SRS resources. The plurality of third type of SRS resources may also be discontinuous SRS resources located in different slots, as shown in FIG. 6B, which is a schematic diagram that the plurality of third type of SRS resources are discontinuous SRS resources.

In an example, for each of the third type of SRS resources in the third SRS resource set, if the third type of SRS resource is located in an uplink slot or an uplink symbol, the SRS transmission scheme based on the third type of SRS resource can refer to the SRS transmission scheme based on the second type of SRS resource.

For example, if there is no SBFD time-frequency resource in the uplink slot or uplink symbol, the UE can send the SRS to the base station based on the third type of SRS resource.

Or, if there is an SBFD time-frequency resource in the uplink slot or uplink symbol, and the SBFD time-frequency resource includes downlink subbands, and the third type of SRS resource does not overlap with a downlink subband of the SBFD time-frequency resource, the UE sends the SRS to the base station based on the third type of SRS resource.

Or, if there is an SBFD time-frequency resource in the uplink slot or uplink symbol, and the SBFD time-frequency resource include a downlink subband, and the third type of SRS resource overlaps with the downlink subband of the SBFD time-frequency resource, the UE can send the SRS to the base station using Manner 31, Manner 32, Manner 33, Manner 34 or Manner 35, which will not be repeated here.

In an example, for each of the third type of SRS resources in the third SRS resource set, if the third type of SRS resource is located in a downlink slot, a downlink symbol, a Flexible slot or a Flexible symbol, and the third type of SRS resource is located within an uplink subband of the SBFD time-frequency resource, that is, within a range of the uplink subband of the SBFD time-frequency resource (i.e., the third type of SRS resource is smaller than the uplink subband of the SBFD time-frequency resource), the UE may send the SRS to the base station based on the third type of SRS resource. For example, the UE can send the SRS to the base station according to the target bandwidth configuration list based on the third partial resource.

In an example, for each of the third type of SRS resources in the third SRS resource set, if the third type of SRS resource is located in a downlink slot, a downlink symbol, a Flexible slot or a Flexible symbol, and the third type of SRS resource exceeds the range of the uplink subband of the SBFD time-frequency resource, that is, the third type of SRS resource includes a fifth part resource not exceeding the range of the uplink subband and a sixth part resource exceeding the range of the uplink subband, the UE can send the SRS to the base station based on the fifth part resource and/or the sixth part resource.

Manner 41, the UE sends the SRS based on the fifth part resource of the third type of SRS resource, and sends the SRS based on the sixth part resource of the third type of SRS resource.

For example, if the SBFD time-frequency resource is located in a downlink slot or a downlink symbol, or if the SBFD time-frequency resource is located in a Flexible slot or a Flexible symbol, the UE is allowed to send the SRS on a resource exceeding the uplink subband of the SBFD time-frequency resource, and the UE sends the SRS to the base station based on the fifth part resource and the sixth part resource.

Manner 42, the UE sends the SRS based on the fifth part resource of the third type of SRS resource, and prohibits sending the SRS to the base station based on the sixth part resource of the third type of SRS resource.

For example, if the SBFD time-frequency resource is located in a downlink slot or a downlink symbol, or if the SBFD time-frequency resource is located in a Flexible slot or a Flexible symbol, the UE is not allowed to send SRS on a resource exceeding the uplink subband of the SBFD time-frequency resource. The UE sends the SRS to the base station based on the fifth part resource of the third type of SRS resource, and prohibits sending the SRS to the base station based on the sixth part resource of the third type of SRS resource.

Manner 43, the UE prohibits sending the SRS to the base station based on the fifth part resource of the third type of SRS resource, and prohibits sending the SRS to the base station based on the sixth part resource of the third type of SRS resource.

For example, if the third type of SRS resource includes the sixth part resource that exceeds the range of the uplink subband of SBFD time-frequency resource, it is considered that the configuration is wrong, and therefore, sending the SRS to the base station is prohibited.

Manner 44, if the SBFD time-frequency resource is located in a downlink slot or a downlink symbol, the UE may send the SRS to the base station based on the fifth part resource, and prohibit sending the SRS to the base station based on the sixth part resource; or, prohibit sending the SRS to the base station based on the fifth part resource, and prohibit sending the SRS to the base station based on the sixth part resource; or, if the SBFD time-frequency resource is located in a Flexible slot or a Flexible symbol, the UE may send the SRS to the base station based on the fifth part resource, and send the SRS to the base station based on the sixth part resource.

For example, if the SBFD time-frequency resource is located in a downlink slot or a downlink symbol, the UE is not allowed to send the SRS on a resource exceeding the uplink subband of the SBFD time-frequency resource. Based on this, the UE may send the SRS to the base station based on the fifth part resource, and prohibit sending the SRS to the base station based on the sixth part resource, or, prohibit sending the SRS to the base station based on the fifth part resource, and prohibit sending the SRS to the base station based on the sixth part resource.

Or, if the SBFD time-frequency resource is located in a Flexible slot or a Flexible symbol, the UE is allowed to send the SRS on a resource exceeding the uplink subband of the SBFD time-frequency resource. Based on this, the UE may send the SRS to the base station based on the fifth part resource, and send the SRS to the base station based on the sixth part resource.

Manner 45, the UE receives SRS transmission indication information from the base station, if the SRS transmission indication information allows sending the SRS through the sixth part resource, the UE may send the SRS to the base station based on the fifth part resource, and send the SRS to the base station based on the sixth part resource; if the SRS transmission indication information does not allow sending the SRS through the sixth part resource, the UE may send the SRS to the base station based on the fifth part resource, and prohibit sending the SRS to the base station based on the sixth part resource; or, prohibit sending the SRS to the base station based on the fifth part resource, and prohibit sending the SRS to the base station based on the sixth part resource.

For example, the base station can indicate whether the UE is allowed to send the SRS on a resource exceeding the uplink subband of SBFD time-frequency resource via signalling (such as 1 or 2 bit signalling, referred to as SRS transmission indication information). For example, the base station can send the SRS transmission indication information to the UE via a DCI message, or an MAC CE message, or an RRC message. If the SRS transmission indication information is used to allow the UE to send an SRS on a resource exceeding the uplink subband of the SBFD time-frequency resource, the UE sends the SRS to the base station based on the fifth part resource and the sixth part resource. If the SBFD time-frequency resource is used to disallow the UE to send the SRS on a resource exceeding the uplink subband of the SBFD time-frequency resource, the UE may send the SRS to the base station based on the fifth part resource, and prohibit sending the SRS to the base station based on the sixth part resource, or, prohibit sending the SRS to the base station based on the fifth part resource, and prohibit sending the SRS to the base station based on the sixth part resource.

In an example, if UE is not allowed to send the SRS on the resource exceeding the uplink subband of SBFD time-frequency resource, transmission power of SRS can further be controlled.

For example, the UE determines target transmission power based on maximum transmission power, and the UE sends the SRS to the base station based on the fifth part resource at the target transmission power.

Or, the UE determines the target transmission power based on the maximum transmission power and the resource ratio, which can be a resource ratio of the fifth part resource to the third type of SRS resource. The UE sends the SRS to the base station based on the fifth part resource at the target transmission power.

Or, the UE receives the transmission power indication information from the base station, if the transmission power indication information is the first indication information, determine the target transmission power based on the maximum transmission power, and if the transmission power indication information is the second indication information, determine the target transmission power based on the maximum transmission power and the resource ratio, and the UE sends the SRS to the base station based on the fifth part resource at the target transmission power.

In an example, the base station may further send an SRS resource indication message to the UE, and the UE receives the SRS resource indication information; where the SRS resource indication information is used to indicate to allowing to send the SRS in the SRS resource overlapping with the uplink subband of the SBFD time-frequency resource, or to prohibit sending the SRS in the SRS resource overlapping with the uplink subband of the SBFD time-frequency resource. If it is prohibited to send the SRS in the SRS resource overlapping with the uplink subband of the SBFD time-frequency resource, the UE will not send the SRS in the SRS resource overlapping with the uplink subband.

For example, for an aperiodic, semi-persistent, periodic SRS transmission process, the base station can indicate whether to allow SRS transmission on SRS resources that overlap with the uplink subbands of SBFD time-frequency resources via 1-bit signalling (i.e. the SRS resource indication information). For example, if the bit is 1, SRS is allowed to be sent, and if the bit is 0, SRS is not allowed to be sent, thus reducing processing complexity of the UE.

It can be seen from the above technical solution that UE uses the SRS resource(s) in the SRS resource set(s) for SRS transmission, and when the SBFD time-frequency resource overlaps with the SRS resource, the SBFD time-frequency resource is used for SRS transmission, which improves uplink data transmission reliability and cell coverage radius, enhances the accuracy of downlink beamforming and the real-time performance of beam tracking, and reduces uplink and downlink interference caused by an introduction of SBFD time-frequency resource, so that SBFD time-frequency resource assignment and SRS transmission mechanism can be effectively combined and implemented. From the perspective of a system, it can support SRS transmission of a TDD system, improve resource utilization, improve network coverage and network capacity, increase uplink transmission resources and cell coverage, reduce uplink transmission delay and increase uplink transmission capacity.

Based on the same invention concept, SRS transmission apparatuses as well as a base station and a UE corresponding to the SRS transmission methods are further provided. As the principle of solving the problem between the base station and UE is similar to that of the SRS transmission methods, the implementation of the base station and the UE is referred to the implementation of the SRS transmission method, and any repetition will not be repeated.

Based on the same application concept, an example of the present disclosure provides an SRS transmission apparatus, which can be performed by a user equipment. As shown in FIG. 7A, and the apparatus includes:
a receiving module 711, configured to receive SRS resource configuration information sent by a base station, where the SRS resource configuration information is used to indicate an SRS resource set, and the SRS resource set includes an SRS resource overlapping with an uplink subband of an SBFD time-frequency resource; and
a sending module 712, configured to send an SRS to the base station based on an SRS resource in the SRS resource set.

In an example, the SRS resource configuration information includes first configuration information of a first SRS resource set and second configuration information of a second SRS resource set, where the first configuration information is used to indicate the first SRS resource set and the second configuration information is used to indicate the second SRS resource set, the first SRS resource set includes multiple first type of SRS resources overlapping with uplink subbands of the SBFD time-frequency resources, and the second SRS resource set includes multiple second type of SRS resources located in uplink slots or uplink symbols; or,
the SRS resource configuration information includes third configuration information of a SRS resource set, the third configuration information is used to indicate the third SRS resource set, the third SRS resource set includes multiple third type of SRS resources, and the plurality of third type of SRS resources at least include the SRS resource overlapping with the uplink subband of the SBFD time-frequency resource, where the plurality of third type of SRS resources are continuous SRS resources, or the plurality of third type of SRS resources are discontinuous SRS resources located in different slots.

In an example, the apparatus further includes: an acquiring module, configured to acquire a preconfigured target bandwidth configuration list, where the target bandwidth configuration list is generated based on an initial bandwidth configuration list, in response to determining that a number of physical resource blocks PRBs between a first physical layer resource and a second physical layer resource which are adjacent in the initial bandwidth configuration list is greater than a preset threshold, an intermediate physical layer resource is added to the initial bandwidth configuration list to obtain the target bandwidth configuration list, a number of PRBs between the first physical layer resource and the intermediate physical layer resource is not greater than the preset threshold, and a number of PRBs between the intermediate physical layer resource and the second physical layer resource is not greater than the preset threshold; and
when the sending module 712 sends the SRS to the base station based on the SRS resource in the first SRS resource set, the sending module is specifically configured to: in response to determining that the first type of SRS resource in the first SRS resource set does not exceed a range of the uplink subband of the SBFD time-frequency resource, send the SRS to the base station according to the target bandwidth configuration list based on the first type of SRS resource in the first SRS resource set.

In an example, if the first type of SRS resource in the first SRS resource set includes a first partial resource not exceeding the range of the uplink subband of the SBFD time-frequency resource and a second partial resource exceeding the range of the uplink subband of the SBFD time-frequency resource, when the sending module 712 sends the SRS to the base station based on the SRS resource in the first SRS resource set, the sending module is specifically configured to: send the SRS to the base station based on the first partial resource of the first type of SRS resource, and send the SRS to the base station based on the second partial resource of the first type of SRS resource; or,
send the SRS to the base station based on the first partial resource of the first type of SRS resource, and prohibit sending the SRS to the base station based on the second partial resource of the first type of SRS resource; or,
prohibit sending the SRS to the base station based on the first partial resource of the first type of SRS resource, and prohibit sending the SRS to the base station based on the second partial resource of the first type of SRS resource; or,
in response to determining that the SBFD time-frequency resource is located in a downlink slot or a downlink symbol, send the SRS to the base station based on the first partial resource of the first type of SRS resource, and prohibit sending the SRS to the base station based on the second partial resource of the first type of SRS resource; or, prohibit sending the SRS to the base station based on the first partial resource of the first type of SRS resource, and prohibit sending the SRS to the base station based on the second partial resource of the first type of SRS resource; or, in response to determining that the SBFD time-frequency resource is located in a Flexible slot or a Flexible symbol, send the SRS to the base station based on the first partial resource of the first type of SRS resource, and send the SRS to the base station based on the second partial resource of the first type of SRS resource; or,
receive SRS transmission indication information from the base station, in response to determining that the SRS transmission indication information allows sending the SRS through the second partial resource, send the SRS to the base station based on the first partial resource of the first type of SRS resource, and send the SRS to the base station based on the second partial resource of the first type of SRS resource; in response to determining that the SRS transmission indication information does not allow sending the SRS through the second partial resource, send the SRS to the base station based on the first partial resource of the first type of SRS resource, and prohibit sending the SRS to the base station based on the second partial resource of the first type of SRS resource; or, prohibit sending the SRS to the base station based on the first partial resource of the first type of SRS resource, and prohibit sending the SRS to the base station based on the second partial resource of the first type of SRS resource.

In an example, if prohibit sending the SRS to the base station based on the second partial resource of the first type of SRS resource, when the sending module 712 sends the SRS based on the first partial resource of the first type of SRS resource, the sending module is specifically configured to: determine target transmission power based on maximum transmission power; or, determine the target transmission power based on the maximum transmission power and a resource ratio; or, receive transmission power indication information from a base station, if the transmission power indication information is first indication information, determine the target transmission power based on the maximum transmission power, and if the transmission power indication information is second indication information, determine the target transmission power based on the maximum transmission power and the resource ratio, where the resource ratio is a resource ratio of the first partial resource to the first type of SRS resource; and
send the SRS to the base station based on the first partial resource at the target transmission power.

In an example, for each of the second type of SRS resources in the second SRS resource set, if an uplink slot or an uplink symbol where the second type of SRS resource is located includes a downlink subband of the SBFD time-frequency resource, and the second type of SRS resource includes a third partial resource not located in a range of the downlink subband and a fourth part resource located in the range of the downlink subband; when the sending module 712 sends the SRS to the base station based on the SRS resource in the second SRS resource set, the sending module is specifically configured to: send the SRS to the base station based on the third partial resource of the second type of SRS resource, and prohibit sending the SRS to the base station based on the fourth part resource of the second type of SRS resource; or,
send the SRS to the base station based on the third partial resource of the second type of SRS resource, and send the SRS to the base station based on the fourth part resource of the second type of SRS resource; or,
prohibit sending the SRS to the base station based on the third partial resource of the second type of SRS resource, and prohibit sending the SRS to the base station based on the fourth part resource of the second type of SRS resource; or,
in response to determining that the third partial resource of the second type of SRS resource includes two discontinuous resources located on both sides of the downlink subband, send the SRS to the base station based on the two discontinuous resources, and prohibit sending the SRS to the base station based on the fourth part resource of the second type of SRS resource; or,
in response to determining that the third partial resource includes two discontinuous resources located on both sides of the downlink subband, cascade the two discontinuous resources to obtain a continuous resource, send the SRS to the base station based on the continuous resource, and prohibit sending the SRS to the base station based on the fourth part resource of the second type of SRS resource.

In an example, when the sending module 712 sends the SRS to the base station based on the SRS resource in the third SRS resource set, the sending module is specifically configured to: for each of the third type of SRS resources in the third SRS resource set, if the third type of SRS resource is located in an uplink slot or an uplink symbol, send the SRS to the base station based on the third type of SRS resource; or,
in response to determining that the third type of SRS resource is located in a downlink slot, a downlink symbol, a Flexible slot or a Flexible symbol, and the third type of SRS resource is located within the uplink subband of the SBFD time-frequency resource, send the SRS to the base station based on the third type of SRS resource; in response to determining that the third type of SRS resource includes a fifth part resource not exceed a range of the uplink subband and a sixth part resource exceeds the range of the uplink subband, send the SRS to the base station based on the fifth part resource and/or the sixth part resource.

In an example, when the sending module 712 sends the SRS to the base station based on the fifth part resource and/or the sixth part resource, the sending module is specifically configured to: send the SRS to the base station based on the fifth part resource and send the SRS to the base station based on the sixth part resource; or,
send the SRS to the base station based on the fifth part resource, and prohibit sending the SRS to the base station based on the sixth part resource; or,
prohibit sending the SRS to the base station based on the fifth part resource, and prohibit sending the SRS to the base station based on the sixth part resource; or,
in response to determining that the SBFD time-frequency resource is located in a downlink slot or a downlink symbol, sending the SRS to the base station based on the fifth part resource, and prohibiting sending the SRS to the base station based on the sixth part resource; or, prohibiting sending the SRS to the base station based on the fifth part resource, and prohibiting sending the SRS to the base station based on the sixth part resource; or, in response to determining that the SBFD time-frequency resource is located in a Flexible slot or a Flexible symbol, sending the SRS to the base station based on the fifth part resource, and sending the SRS to the base station based on the sixth part resource; or,
receive SRS transmission indication information from the base station, in response to determining that the SRS transmission indication information allows sending the SRS through the sixth part resource, send the SRS to the base station based on the fifth part resource, and sending the SRS to the base station based on the sixth part resource; in response to determining that the SRS transmission indication information does not allow sending the SRS through the sixth part resource, send the SRS to the base station based on the fifth part resource, and prohibiting sending the SRS to the base station based on the sixth part resource; or, prohibit sending the SRS to the base station based on the fifth part resource, and prohibit sending the SRS to the base station based on the sixth part resource.

In an example, the receiving module 711 is further configured to receive SRS resource indication information from the base station; where the SRS resource indication information is used to indicate that it is allowed to send the SRS in the SRS resource overlapping with the uplink subband of the SBFD time-frequency resource, or it is prohibited to send the SRS in the SRS resource overlapping with the uplink subband of the SBFD time-frequency resource.

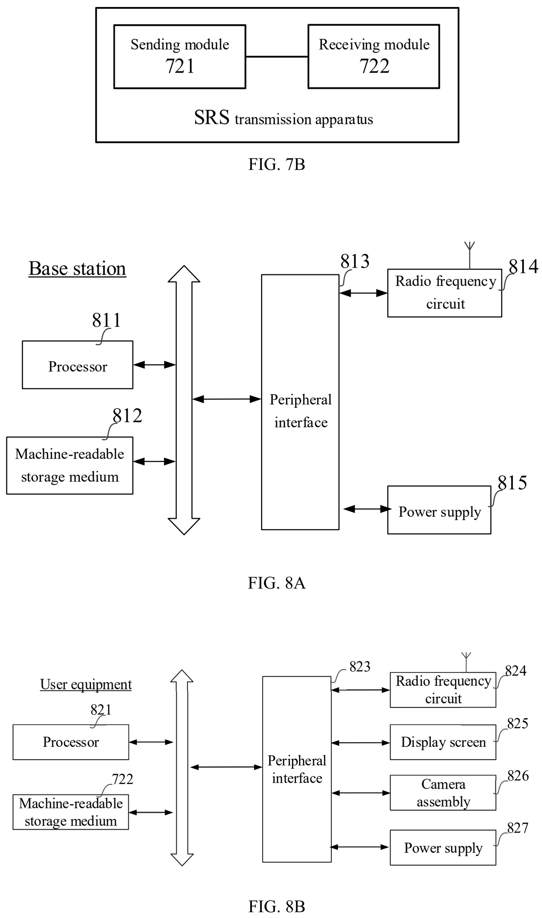

Based on the same application concept, an example of the present disclosure provides an SRS transmission apparatus, which can be performed by a base station. As shown in FIG. 7B, and the apparatus includes:
a sending module 721, configured to send sounding reference signal SRS resource configuration information to a user equipment, where the SRS resource configuration information is used to indicate an SRS resource set used by the user equipment, and the SRS resource set includes an SRS resource overlapping with an uplink subband of a subband full-duplex SBFD time-frequency resource; and
a receiving module 722, configured to receive an SRS sent by the user equipment based on an SRS resource in the SRS resource set.

In an example, when the sending module 721 sends the SRS resource configuration information to the user equipment, the sending module 721 is specifically configured to: in response to determining that the user equipment corresponds to a first SRS resource set and a second SRS resource set, send first configuration information corresponding to the first SRS resource set and second configuration information corresponding to the second SRS resource set to the user equipment, where the first SRS resource set includes multiple first type of SRS resources overlapping with uplink subbands of the SBFD time-frequency resources, and the second SRS resource set includes multiple second type of SRS resources located in uplink slots or uplink symbols; or,
in response to determining that the user equipment corresponds to a third SRS resource set, send third configuration information corresponding to the third SRS resource set to the user equipment, where the third SRS resource set includes multiple third type of SRS resources, and the plurality of third type of SRS resources at least include the SRS resource overlapping with the uplink subband of the SBFD time-frequency resource, where the plurality of third type of SRS resources are continuous SRS resources, or the plurality of third type of SRS resources are discontinuous SRS resources located in different slots.

In an example, the apparatus further includes: an acquiring module, configured to acquire a preconfigured target bandwidth configuration list, where the target bandwidth configuration list is generated based on an initial bandwidth configuration list, in response to determining that a number of physical resource blocks PRBs between a first physical layer resource and a second physical layer resource which are adjacent in the initial bandwidth configuration list is greater than a preset threshold, an intermediate physical layer resource is added to the initial bandwidth configuration list to obtain the target bandwidth configuration list, a number of PRBs between the first physical layer resource and the intermediate physical layer resource is not greater than the preset threshold, and a number of PRBs between the intermediate physical layer resource and the second physical layer resource is not greater than the preset threshold;
In an example, the sending module 721 is further configured to send SRS resource indication information to the user equipment; where the SRS resource indication information is used to indicate that it is allowed to send the SRS in the SRS resource overlapping with the uplink subband of the SBFD time-frequency resource, or it is prohibited to send the SRS in the SRS resource overlapping with the uplink subband of the SBFD time-frequency resource.

Based on the same application concept as the above method, a base station is proposed in an example of the present disclosure. As shown in FIG. 8A, the base station may include a processor 811 and a machine-readable storage medium 812, and the machine-readable storage medium 812 stores machine-executable instructions that can be executed by the processor 811. The processor 811 is configured to execute machine executable instructions to realize the SRS transmission method disclosed in the above example of the present disclosure.

In an example, the processor 811 may include one or more processing cores, such as a 4-core processor, an 8-core processor, etc. The processor 811 may be implemented in at least one hardware form of digital signal processing (DSP), field-programmable gate array (FPGA) and programmable logic array (PLA). The processor 811 may also include a main processor and a co-processor. The main processor is a processor for processing data in an awake state, also called central processing unit (CPU). The co-processor is a low-power processor for processing data in a standby state. In some embodiments, the processor 811 may be integrated with a graphics processing unit (GPU), and the GPU is configured to render and draw contents to be displayed on a display screen.

In an example, the base station may optionally include: a peripheral interface 813 and at least one peripheral device. The processor 811 and the peripheral interface 813 can be connected by a bus or a signal line. Each peripheral can be connected to the peripheral interface 813 via a bus, a signal line or a circuit board. The peripheral device may include: at least one of a radio frequency circuit 814 and a power supply 815.

The radio frequency circuit 814 is configured to receive and transmit radio frequency (RF) signals, also called electromagnetic signals. The radio frequency circuit 814 communicates with the communication network and other communication devices via electromagnetic signals. The radio frequency circuit 814 converts electrical signals into electromagnetic signals for transmission, or, converts received electromagnetic signals to electrical signals. In some examples, the radio frequency circuit 814 includes: an antenna system, an RF transceiver, one or more amplifiers, a tuner, an oscillator, a digital signal processor, a user identity module card, and the like. The radio frequency circuit 814 can communicate with a user equipment via at least one wireless communication protocol. The wireless communication protocols include, but are not limited to: World Wide Web, metropolitan area network, intranet, various generations of mobile communication networks (2G, 3G, 4G, and 5G), wireless local area networks, and/or wireless fidelity (WiFi) networks.

The power supply 815 is configured to supply power to various components in the base station. The power supply 815 can be alternating current, direct current, disposable battery or rechargeable battery.

For example, when the processor 811 executes the machine-executable instructions, it controls the radio frequency circuit 814 to realize the following steps: receiving SRS resource configuration information sent by a base station, where the SRS resource configuration information is used to indicate an SRS resource set, and the SRS resource set includes an SRS resource overlapping with an uplink subband of an SBFD time-frequency resource; and sending an SRS to the base station based on an SRS resource in the SRS resource set.

Based on the same application concept as the above method, a user equipment is proposed in an example of the present disclosure. As shown in FIG. 8B, the user equipment may include a processor 821 and a machine-readable storage medium 822, and the machine-readable storage medium 822 stores machine-executable instructions that can be executed by the processor 821. The processor 821 is configured to execute machine executable instructions to realize the SRS transmission method disclosed in the above example of the present disclosure.

In an example, the processor 821 may include one or more processing cores, such as a 4-core processor, an 8-core processor, etc. The processor 821 can be implemented in at least one hardware form of DSP, FPGA and PLA. The processor 821 may also include a main processor and a co-processor.

In an example, the user equipment may optionally include: a peripheral interface 823 and at least one peripheral device. The processor 821 and the peripheral interface 823 can be connected by a bus or a signal line. Each peripheral can be connected to the peripheral interface 823 via a bus, a signal line or a circuit board. The peripheral device may include: at least one of a radio frequency circuit 824, a touch display screen 825, a camera 826 and a power supply 827.

The radio frequency circuit 824 is configured to receive and transmit RF signals, also called electromagnetic signals. The radio frequency circuit 824 communicates with the communication network and other communication devices via electromagnetic signals. The radio frequency circuit 824 converts electrical signals into electromagnetic signals for transmission, or, converts received electromagnetic signals to electrical signals. In some examples, the radio frequency circuit 824 includes: an antenna system, an RF transceiver, one or more amplifiers, a tuner, an oscillator, a digital signal processor, a user identity module card, and the like. The radio frequency circuit 824 can communicate with a base station via at least one wireless communication protocol. The wireless communication protocols include, but are not limited to: World Wide Web, metropolitan area network, intranet, various generations of mobile communication networks, wireless local area networks, and/or WiFi networks.

The display screen 825 is configured to display a user interface (UI). The UI may include graphics, text, icons, videos and any combination thereof. When the display screen 825 is a touch display screen, the display screen 825 further has the ability to collect touch signals on or above a surface of the display screen 825. The touch signal can be input as a control signal to the processor 821 for processing. At this time, the display screen 825 can further be used to provide virtual buttons and/or virtual keyboards, also called soft buttons and/or soft keyboards.

In some embodiments, the display screen 825 may be one, which is disposed on a front panel of the user equipment. In other embodiments, the display screens 825 may be at least two, which are respectively disposed on different surfaces of the user equipment or in a folded design. In still other embodiments, the display screen 825 may be a flexible display screen, which is disposed on a curved surface or a folded surface of the user equipment. Even, the display screen 825 can further be set as a non-rectangular irregular pattern, that is, a special-shaped screen. The display screen 825 can be prepared using materials such as liquid crystal display (LCD) and organic light emitting diode (OLED).

The camera assembly 826 is configured to capture images or videos. In some embodiments, the camera assembly 826 includes a front camera and/or a rear camera. Usually, the front camera is provided on the front panel of the user equipment, and the rear camera is provided on the back of the user equipment. In some embodiments, there are at least two rear cameras, which are any one of a main camera, a depth-of-field camera, a wide-angle camera and a telephoto camera, so as to realize a fusion of the main camera and the depth-of-field camera to realize a background blur function, the fusion of the main camera and the wide-angle camera to realize panoramic shooting, virtual reality (VR) shooting function or other fusion shooting functions. In some embodiments, the camera assembly 826 may further include a flash. The flash may be a single color temperature flash or a dual color temperature flash. The dual color temperature flash refers to a combination of warm light flash and cold light flash, which can be used for light compensation under different color temperatures.

The power supply 827 is configured to supply power to various components in the user equipment. The power supply 827 can be alternating current, direct current, disposable battery or rechargeable battery. When the power supply 827 includes a rechargeable battery, the rechargeable battery may be a wired rechargeable battery or a wireless rechargeable battery. Wired rechargeable batteries are batteries charged by wired lines, and wireless rechargeable batteries are batteries charged by wireless coils. The rechargeable battery can further be used to support fast charging technology.

For example, when the processor 821 executes the machine-executable instructions, it controls the radio frequency circuit 824 to realize the following steps: sending SRS resource configuration information to a user equipment, where the SRS resource configuration information is used to indicate an SRS resource set used by the user equipment, and the SRS resource set includes an SRS resource overlapping with an uplink subband of an SBFD time-frequency resource; and receiving an SRS sent by the user equipment based on an SRS resource in the SRS resource set.

Based on the same application concept as the above method, an example of the present disclosure further provides a machine-readable storage medium, the machine-readable storage medium having stored thereon a number of computer instructions, the computer instructions, when executed by a processor, being capable of realizing the SRS transmission method disclosed in the above example of the present disclosure.

The machine-readable storage medium may be any electronic, magnetic, optical or other physical storage apparatus, and may contain or store information, such as executable instructions, data, and the like. For example, the machine-readable storage medium may be: a random access memory (RAM), a volatile memory, a non-volatile memory, a flash memory, a storage drive (e.g., a hard disk drive), a solid state drive, any type of storage disk (e.g., a CD-ROM, a dvd, etc.), or the like, or a combination thereof.

The systems, apparatuses, modules or units illustrated in the above embodiments may specifically be realized by a computer or an entity, or by a product with a certain function. A typical implementation device is a computer, and a specific form of the computer may be a personal computer, a laptop computer, a cellular telephone, a camera phone, a smart phone, a personal digital assistant, a media player, a navigation device, an e-mail transceiver, a gaming console, a tablet computer, a wearable device, or a combination of any of these devices.

The above is only embodiments of the present disclosure and is not intended to limit the present disclosure. Various modifications and variations of the present disclosure will occur to those skilled in the art. Any modifications, equivalent substitutions, improvements, etc. made within the spirit and principle of the present disclosure should be included in the scope of the claims of the present disclosure.

## Claims

1. A sounding reference signal SRS transmission method, performed by a user equipment, comprising:
receiving SRS resource configuration information sent by a base station, wherein the SRS resource configuration information is used to indicate an SRS resource set, and the SRS resource set comprises an SRS resource overlapping with an uplink subband of a subband full-duplex SBFD time-frequency resource; and
sending an SRS to the base station based on an SRS resource in the SRS resource set.

2. The method according to claim 1, wherein,
the SRS resource configuration information comprises first configuration information of a first SRS resource set and second configuration information of a second SRS resource set, wherein the first configuration information is used to indicate the first SRS resource set, the second configuration information is used to indicate the second SRS resource set, the first SRS resource set comprises multiple first type of SRS resources overlapping with uplink subbands of SBFD time-frequency resources, and the second SRS resource set comprises multiple second type of SRS resources located in uplink slots or uplink symbols; or,
the SRS resource configuration information comprises third configuration information of an SRS resource set, the third configuration information is used to indicate the third SRS resource set, the third SRS resource set comprises multiple third type of SRS resources, and the plurality of third type of SRS resources at least comprise the SRS resource overlapping with the uplink subband of the SBFD time-frequency resource, wherein the plurality of third type of SRS resources are continuous SRS resources, or the plurality of third type of SRS resources are discontinuous SRS resources located in different slots.

3. The method according to claim 2, further comprising:
acquiring a preconfigured target bandwidth configuration list, wherein the target bandwidth configuration list is generated based on an initial bandwidth configuration list, in response to determining that a number of physical resource blocks PRBs between a first physical layer resource and a second physical layer resource which are adjacent in the initial bandwidth configuration list is greater than a preset threshold, an intermediate physical layer resource is added to the initial bandwidth configuration list to obtain the target bandwidth configuration list, a number of PRBs between the first physical layer resource and the intermediate physical layer resource is not greater than the preset threshold, and a number of PRBs between the intermediate physical layer resource and the second physical layer resource is not greater than the preset threshold; and
sending the SRS to the base station based on the SRS resource in the first SRS resource set comprises:
in response to determining that the first type of SRS resource in the first SRS resource set does not exceed a range of the uplink subband of the SBFD time-frequency resource, sending the SRS to the base station according to the target bandwidth configuration list based on the first type of SRS resource in the first SRS resource set.

4. The method according to claim 2, wherein in response to determining that the first type of SRS resource in the first SRS resource set comprises a first partial resource not exceeding a range of the uplink subband of the SBFD time-frequency resource and a second partial resource exceeding the range of the uplink subband of the SBFD time-frequency resource, sending the SRS to the base station based on the SRS resource in the first SRS resource set comprises:
sending the SRS to the base station based on the first partial resource of the first type of SRS resource, and sending the SRS to the base station based on the second partial resource of the first type of SRS resource; or,
sending the SRS to the base station based on the first partial resource of the first type of SRS resource, and prohibiting sending the SRS to the base station based on the second partial resource of the first type of SRS resource; or,
prohibiting sending the SRS to the base station based on the first partial resource of the first type of SRS resource, and prohibiting sending the SRS to the base station based on the second partial resource of the first type of SRS resource; or,
in response to determining that the SBFD time-frequency resource is located in a downlink slot or a downlink symbol, sending the SRS to the base station based on the first partial resource of the first type of SRS resource, and prohibiting sending the SRS to the base station based on the second partial resource of the first type of SRS resource; or, prohibiting sending the SRS to the base station based on the first partial resource of the first type of SRS resource, and prohibiting sending the SRS to the base station based on the second partial resource of the first type of SRS resource; or, in response to determining that the SBFD time-frequency resource is located in a Flexible slot or a Flexible symbol, sending the SRS to the base station based on the first partial resource of the first type of SRS resource, and sending the SRS to the base station based on the second partial resource of the first type of SRS resource; or,
receiving SRS transmission indication information from the base station, in response to determining that the SRS transmission indication information allows sending the SRS through the second partial resource, sending the SRS to the base station based on the first partial resource of the first type of SRS resource, and sending the SRS to the base station based on the second partial resource of the first type of SRS resource; in response to determining that the SRS transmission indication information does not allow sending the SRS through the second partial resource, sending the SRS to the base station based on the first partial resource of the first type of SRS resource, and prohibiting sending the SRS to the base station based on the second partial resource of the first type of SRS resource; or, prohibiting sending the SRS to the base station based on the first partial resource of the first type of SRS resource, and prohibiting sending the SRS to the base station based on the second partial resource of the first type of SRS resource.

5. The method according to claim 4, wherein in response to determining that it is prohibited to send the SRS to the base station based on the second partial resource of the first type of SRS resource, sending the SRS to the base station based on the first partial resource of the first type of SRS resource comprises:
determining target transmission power based on maximum transmission power; or, determining the target transmission power based on the maximum transmission power and a resource ratio; or, receiving transmission power indication information from a base station, in response to determining that the transmission power indication information is first indication information, determining the target transmission power based on the maximum transmission power, and in response to determining that the transmission power indication information is second indication information, determining the target transmission power based on the maximum transmission power and the resource ratio, wherein the resource ratio is a resource ratio of the first partial resource to the first type of SRS resource; and
sending the SRS to the base station based on the first partial resource at the target transmission power.

6. The method according to claim 2, for each of the second type of SRS resources in the second SRS resource set, in response to determining that an uplink slot or an uplink symbol where the second type of SRS resource is located comprises a downlink subband of the SBFD time-frequency resource, and the second type of SRS resource comprises a third partial resource not located in a range of the downlink subband and a fourth part resource located in the range of the downlink subband, sending the SRS to the base station based on the SRS resource in the second SRS resource set comprises:
sending the SRS to the base station based on the third partial resource of the second type of SRS resource, and prohibiting sending the SRS to the base station based on the fourth part resource of the second type of SRS resource; or,
sending the SRS to the base station based on the third partial resource of the second type of SRS resource, and sending the SRS to the base station based on the fourth part resource of the second type of SRS resource; or,
prohibiting sending the SRS to the base station based on the third partial resource of the second type of SRS resource, and prohibiting sending the SRS to the base station based on the fourth part resource of the second type of SRS resource; or,
in response to determining that the third partial resource of the second type of SRS resource comprises two discontinuous resources located on both sides of the downlink subband, sending the SRS to the base station based on the two discontinuous resources, and prohibiting sending the SRS to the base station based on the fourth part resource of the second type of SRS resource; or,
in response to determining that the third partial resource comprises the two discontinuous resources located on both sides of the downlink subband, cascading the two discontinuous resources to obtain a continuous resource, sending the SRS to the base station based on the continuous resource, and prohibiting sending the SRS to the base station based on the fourth part resource of the second type of SRS resource.

7. The method according to claim 2, wherein sending the SRS to the base station based on the SRS resource in the third SRS resource set comprises:
for each of the third type of SRS resources in the third SRS resource set, in response to determining that the third type of SRS resource is located in an uplink slot or an uplink symbol, sending the SRS to the base station based on the third type of SRS resource;
or, in response to determining that the third type of SRS resource is located in a downlink slot, a downlink symbol, a Flexible slot or a Flexible symbol, and the third type of SRS resource is located within the uplink subband of the SBFD time-frequency resource, sending the SRS to the base station based on the third type of SRS resource; in response to determining that the third type of SRS resource comprises a fifth part resource not exceed a range of the uplink subband and a sixth part resource exceeds the range of the uplink subband, sending the SRS to the base station based on the fifth part resource and/or the sixth part resource.

8. The method according to claim 7, wherein sending the SRS to the base station based on the fifth part resource and/or the sixth part resource comprises:
sending the SRS to the base station based on the fifth part resource, and sending the SRS to the base station based on the sixth part resource; or,
sending the SRS to the base station based on the fifth part resource, and prohibiting sending the SRS to the base station based on the sixth part resource; or,
prohibiting sending the SRS to the base station based on the fifth part resource, and prohibiting sending the SRS to the base station based on the sixth part resource; or,
in response to determining that the SBFD time-frequency resource is located in the downlink slot or the downlink symbol, sending the SRS to the base station based on the fifth part resource, and prohibiting sending the SRS to the base station based on the sixth part resource; or, prohibiting sending the SRS to the base station based on the fifth part resource, and prohibiting sending the SRS to the base station based on the sixth part resource; or, in response to determining that the SBFD time-frequency resource is located in the Flexible slot or the Flexible symbol, sending the SRS to the base station based on the fifth part resource, and sending the SRS to the base station based on the sixth part resource; or,
receiving SRS transmission indication information from the base station, in response to determining that the SRS transmission indication information allows sending the SRS through the sixth part resource, sending the SRS to the base station based on the fifth part resource, and sending the SRS to the base station based on the sixth part resource; in response to determining that the SRS transmission indication information does not allow sending the SRS through the sixth part resource, sending the SRS to the base station based on the fifth part resource, and prohibiting sending the SRS to the base station based on the sixth part resource; or, prohibiting sending the SRS to the base station based on the fifth part resource, and prohibiting sending the SRS to the base station based on the sixth part resource.

9. The method according to any one of claims 1-8, further comprising:
receiving SRS resource indication information from the base station, wherein the SRS resource indication information is used to indicate that it is allowed to send the SRS in the SRS resource overlapping with the uplink subband of the SBFD time-frequency resource, or it is prohibited to send the SRS in the SRS resource overlapping with the uplink subband of the SBFD time-frequency resource.

10. A sounding reference signal SRS transmission method, performed by a base station, comprising:
sending SRS resource configuration information to a user equipment, wherein the SRS resource configuration information is used to indicate an SRS resource set used by the user equipment, and the SRS resource set comprises an SRS resource overlapping with an uplink subband of a subband full-duplex SBFD time-frequency resource; and
receiving an SRS sent by the user equipment based on an SRS resource in the SRS resource set.

11. The method according to claim 10, wherein sending the SRS resource configuration information to the user equipment comprises:
in response to determining that the user equipment corresponds to a first SRS resource set and a second SRS resource set, sending first configuration information corresponding to the first SRS resource set and second configuration information corresponding to the second SRS resource set to the user equipment, wherein the first SRS resource set comprises multiple first type of SRS resources overlapping with uplink subbands of SBFD time-frequency resources, and the second SRS resource set comprises multiple second type of SRS resources located in uplink slots or uplink symbols; or,
in response to determining that the user equipment corresponds to a third SRS resource set, sending third configuration information corresponding to the third SRS resource set to the user equipment, wherein the third SRS resource set comprises multiple third type of SRS resources, and the plurality of third type of SRS resources at least comprise the SRS resource overlapping with the uplink subband of the SBFD time-frequency resource, wherein the plurality of third type of SRS resources are continuous SRS resources, or the plurality of third type of SRS resources are discontinuous SRS resources located in different slots.

12. The method according to claim 11, further comprising:
acquiring a preconfigured target bandwidth configuration list, wherein the target bandwidth configuration list is generated based on an initial bandwidth configuration list, in response to determining that a number of physical resource blocks PRBs between a first physical layer resource and a second physical layer resource which are adjacent in the initial bandwidth configuration list is greater than a preset threshold, an intermediate physical layer resource is added to the initial bandwidth configuration list to obtain the target bandwidth configuration list, a number of PRBs between the first physical layer resource and the intermediate physical layer resource is not greater than the preset threshold, and a number of PRBs between the intermediate physical layer resource and the second physical layer resource is not greater than the preset threshold.

13. The method according to claim 10, further comprising:
sending SRS resource indication information to the user equipment, wherein the SRS resource indication information is used to indicate that it is allowed to send the SRS in the SRS resource overlapping with the uplink subband of the SBFD time-frequency resource, or it is prohibited to send the SRS in the SRS resource overlapping with the uplink subband of the SBFD time-frequency resource.

14. A sounding reference signal SRS transmission apparatus, performed by a user equipment, comprising:
a receiving module, configured to receive SRS resource configuration information sent by a base station, wherein the SRS resource configuration information is used to indicate an SRS resource set, and the SRS resource set comprises an SRS resource overlapping with an uplink subband of a subband full-duplex SBFD time-frequency resource; and
a sending module, configured to send an SRS to the base station based on an SRS resource in the SRS resource set.

15. The apparatus according to claim 14, wherein,
the SRS resource configuration information comprises first configuration information of a first SRS resource set and second configuration information of a second SRS resource set, wherein the first configuration information is used to indicate the first SRS resource set, the second configuration information is used to indicate the second SRS resource set, the first SRS resource set comprises multiple first type of SRS resources overlapping with uplink subbands of SBFD time-frequency resources, and the second SRS resource set comprises multiple second type of SRS resources located in uplink slots or uplink symbols; or,
the SRS resource configuration information comprises third configuration information of a SRS resource set, the third configuration information is used to indicate the third SRS resource set, the third SRS resource set comprises multiple third type of SRS resources, and the plurality of third type of SRS resources at least comprise the SRS resource overlapping with the uplink subband of the SBFD time-frequency resource, wherein the plurality of third type of SRS resources are continuous SRS resources, or the plurality of third type of SRS resources are discontinuous SRS resources located in different slots.

16. The apparatus according to claim 15, further comprising:
an acquiring module, configured to acquire a preconfigured target bandwidth configuration list, wherein the target bandwidth configuration list is generated based on an initial bandwidth configuration list, in response to determining that a number of physical resource blocks PRBs between a first physical layer resource and a second physical layer resource which are adjacent in the initial bandwidth configuration list is greater than a preset threshold, an intermediate physical layer resource is added to the initial bandwidth configuration list to obtain the target bandwidth configuration list, a number of PRBs between the first physical layer resource and the intermediate physical layer resource is not greater than the preset threshold, and a number of PRBs between the intermediate physical layer resource and the second physical layer resource is not greater than the preset threshold; and
when the sending module sends the SRS to the base station based on the SRS resource in the first SRS resource set, the sending module is specifically configured to: in response to determining that the first type of SRS resource in the first SRS resource set does not exceed a range of the uplink subband of the SBFD time-frequency resource, send the SRS to the base station according to the target bandwidth configuration list based on the first type of SRS resource in the first SRS resource set.

17. The apparatus according to claim 15, wherein in response to determining that the first type of SRS resource in the first SRS resource set comprises a first partial resource not exceeding a range of the uplink subband of the SBFD time-frequency resource and a second partial resource exceeding the range of the uplink subband of the SBFD time-frequency resource, when the sending module sends the SRS to the base station based on the SRS resource in the first SRS resource set, the sending module is specifically configured to:
send the SRS to the base station based on the first partial resource of the first type of SRS resource, and send the SRS to the base station based on the second partial resource of the first type of SRS resource; or,
send the SRS to the base station based on the first partial resource of the first type of SRS resource, and prohibit sending the SRS to the base station based on the second partial resource of the first type of SRS resource; or,
prohibit sending the SRS to the base station based on the first partial resource of the first type of SRS resource, and prohibit sending the SRS to the base station based on the second partial resource of the first type of SRS resource; or,
in response to determining that the SBFD time-frequency resource is located in a downlink slot or a downlink symbol, send the SRS to the base station based on the first partial resource of the first type of SRS resource, and prohibit sending the SRS to the base station based on the second partial resource of the first type of SRS resource; or, prohibit sending the SRS to the base station based on the first partial resource of the first type of SRS resource, and prohibit sending the SRS to the base station based on the second partial resource of the first type of SRS resource; or, in response to determining that the SBFD time-frequency resource is located in a Flexible slot or a Flexible symbol, send the SRS to the base station based on the first partial resource of the first type of SRS resource, and send the SRS to the base station based on the second partial resource of the first type of SRS resource; or,
receive SRS transmission indication information from the base station, in response to determining that the SRS transmission indication information allows sending the SRS through the second partial resource, send the SRS to the base station based on the first partial resource of the first type of SRS resource, and send the SRS to the base station based on the second partial resource of the first type of SRS resource; in response to determining that the SRS transmission indication information does not allow sending the SRS through the second partial resource, send the SRS to the base station based on the first partial resource of the first type of SRS resource, and prohibit sending the SRS to the base station based on the second partial resource of the first type of SRS resource; or, prohibit sending the SRS to the base station based on the first partial resource of the first type of SRS resource, and prohibit sending the SRS to the base station based on the second partial resource of the first type of SRS resource.

18. The apparatus according to claim 17, in response to determining that it is prohibited to send the SRS to the base station based on the second partial resource of the first type of SRS resource, when the sending module sends the SRS to the base station based on the SRS resource in the first SRS resource set, the sending module is specifically configured to:
determine target transmission power based on maximum transmission power; or, determining the target transmission power based on the maximum transmission power and a resource ratio; or, receiving transmission power indication information from the base station, in response to determining that the transmission power indication information is a first indication information, determining the target transmission power based on the maximum transmission power, and in response to determining that the transmission power indication information is a second indication information, determining the target transmission power based on the maximum transmission power and the resource ratio, wherein the resource ratio is a resource ratio of the first partial resource to the first type of SRS resource; and
send the SRS to the base station based on the first partial resource at the target transmission power.

19. The apparatus according to claim 15, for each of the second type of SRS resources in the second SRS resource set, in response to determining that an uplink slot or an uplink symbol where the second type of SRS resource is located comprises a downlink subband of the SBFD time-frequency resource, and the second type of SRS resource comprises a third partial resource not located in a range of the downlink subband and a fourth part resource located in the range of the downlink subband, when the sending module sends the SRS to the base station based on the SRS resource in the second SRS resource set, the sending module is specifically configured to:
send the SRS to the base station based on the third partial resource of the second type of SRS resource, and prohibit sending the SRS to the base station based on the fourth part resource of the second type of SRS resource; or,
send the SRS to the base station based on the third partial resource of the second type of SRS resource, and send the SRS to the base station based on the fourth part resource of the second type of SRS resource; or,
prohibit sending the SRS to the base station based on the third partial resource of the second type of SRS resource, and prohibit sending the SRS to the base station based on the fourth part resource of the second type of SRS resource; or,
in response to determining that the third partial resource of the second type of SRS resource comprises two discontinuous resources located on both sides of the downlink subband, send the SRS to the base station based on the two discontinuous resources, and prohibit sending the SRS to the base station based on the fourth part resource of the second type of SRS resource; or,
in response to determining that the third partial resource comprises the two discontinuous resources located on both sides of the downlink subband, cascade the two discontinuous resources to obtain a continuous resource, send the SRS to the base station based on the continuous resource, and prohibit sending the SRS to the base station based on the fourth part resource of the second type of SRS resource.

20. The apparatus according to claim 15, wherein when the sending module sends the SRS to the base station based on the SRS resource in the third SRS resource set, the sending module is specifically configured to:
for each of the third type of SRS resources in the third SRS resource set, in response to determining that the third type of SRS resource is located in an uplink slot or an uplink symbol, send the SRS to the base station based on the third type of SRS resource;
or, in response to determining that the third type of SRS resource is located in a downlink slot, a downlink symbol, a Flexible slot or a Flexible symbol, and the third type of SRS resource is located within the uplink subband of the SBFD time-frequency resource, send the SRS to the base station based on the third type of SRS resource; in response to determining that the third type of SRS resource comprises a fifth part resource not exceed a range of the uplink subband and a sixth part resource exceeds the range of the uplink subband, send the SRS to the base station based on the fifth part resource and/or the sixth part resource.

21. The apparatus according to claim 20, wherein when the sending module sends the SRS to the base station based on the fifth part resource and/or the sixth part resource, the sending module is specifically configured to:
send the SRS to the base station based on the fifth part resource, and send the SRS to the base station based on the sixth part resource; or,
send the SRS to the base station based on the fifth part resource, and prohibit sending the SRS to the base station based on the sixth part resource;
or, prohibit sending the SRS to the base station based on the fifth part resource, and prohibit sending the SRS to the base station based on the sixth part resource; or,
in response to determining that the SBFD time-frequency resource is located in a downlink slot or a downlink symbol, send the SRS to the base station based on the fifth part resource, and prohibiting sending the SRS to the base station based on the sixth part resource; or, prohibiting sending the SRS to the base station based on the fifth part resource, and prohibiting sending the SRS to the base station based on the sixth part resource; or, in response to determining that the SBFD time-frequency resource is located in a Flexible slot or a Flexible symbol, send the SRS to the base station based on the fifth part resource, and send the SRS to the base station based on the sixth part resource; or,
receive SRS transmission indication information from the base station, in response to determining that the SRS transmission indication information allows sending the SRS through the sixth part resource, send the SRS to the base station based on the fifth part resource, and send the SRS to the base station based on the sixth part resource; in response to determining that the SRS transmission indication information does not allow sending the SRS through the sixth part resource, send the SRS to the base station based on the fifth part resource, and prohibit sending the SRS to the base station based on the sixth part resource; or, prohibit sending the SRS to the base station based on the fifth part resource, and prohibit sending the SRS to the base station based on the sixth part resource.

22. The apparatus according to any one of claims 14-21, wherein the receiving module is further configured to receive SRS resource indication information from the base station, wherein the SRS resource indication information is used to indicate that it is allowed to send the SRS in the SRS resource overlapping with the uplink subband of the SBFD time-frequency resource, or it is prohibited to send the SRS in the SRS resource overlapping with the uplink subband of the SBFD time-frequency resource.

23. A sounding reference signal SRS transmission apparatus, performed by a base station, comprising:
a sending module, configured to send SRS resource configuration information to a user equipment, wherein the SRS resource configuration information is used to indicate an SRS resource set used by the user equipment, and the SRS resource set comprises an SRS resource overlapping with an uplink subband of a subband full-duplex SBFD time-frequency resource; and
a receiving module, configured to receive an SRS sent by the user equipment based on an SRS resource in the SRS resource set.

24. The apparatus according to claim 23, wherein when the sending module sends the SRS resource configuration information to the user equipment, the sending module is specifically configured to:
in response to determining that the user equipment corresponds to a first SRS resource set and a second SRS resource set, send first configuration information corresponding to the first SRS resource set and second configuration information corresponding to the second SRS resource set to the user equipment, wherein the first SRS resource set comprises multiple first type of SRS resources overlapping with uplink subbands of SBFD time-frequency resources, and the second SRS resource set comprises multiple second type of SRS resources located in uplink slots or uplink symbols; or,
in response to determining that the user equipment corresponds to a third SRS resource set, send third configuration information corresponding to the third SRS resource set to the user equipment, wherein the third SRS resource set comprises multiple third type of SRS resources, and the plurality of third type of SRS resources at least comprise the SRS resource overlapping with the uplink subband of the SBFD time-frequency resource, wherein the plurality of third type of SRS resources are continuous SRS resources, or the plurality of third type of SRS resources are discontinuous SRS resources located in different slots.

25. The apparatus according to claim 24, further comprising:
an acquiring module, configured to acquire a preconfigured target bandwidth configuration list, wherein the target bandwidth configuration list is generated based on an initial bandwidth configuration list, in response to determining that a number of physical resource blocks PRBs between a first physical layer resource and a second physical layer resource which are adjacent in the initial bandwidth configuration list is greater than a preset threshold, an intermediate physical layer resource is added to the initial bandwidth configuration list to obtain the target bandwidth configuration list, a number of PRBs between the first physical layer resource and the intermediate physical layer resource is not greater than the preset threshold, and a number of PRBs between the intermediate physical layer resource and the second physical layer resource is not greater than the preset threshold.

26. The apparatus according to claim 23, wherein the sending module is further configured to send SRS resource indication information to the user equipment; wherein the SRS resource indication information is used to indicate that it is allowed to send the SRS in the SRS resource overlapping with the uplink subband of the SBFD time-frequency resource, or it is prohibited to send the SRS in the SRS resource overlapping with the uplink subband of the SBFD time-frequency resource.

27. A user equipment, comprising a processor and a machine-readable storage medium, wherein the machine-readable storage medium stores machine-executable instructions executable by the processor, and the processor is configured to execute the machine-executable instructions to implement the method according to any one of claims 1-9.

28. A base station, comprising a processor and a machine-readable storage medium, wherein the machine-readable storage medium stores machine-executable instructions executable by the processor, and the processor is configured to execute the machine-executable instructions to implement the method according to any one of claims 10-13.
